# EUROPEAN PATENT APPLICATION

(11) **EP 4 644 113 A1**
(43) Date of publication of application: **05.11.2025**
(21) Application number: 23912080.1
(22) Date of filing: 25.12.2023
(51) Int. Cl.: B32B 7/06, B32B 9/00, B32B 15/08, B32B 15/085, B32B 27/00, B32B 27/32, B65D 65/40

(54) **TRANSFER FILM**

(30) Priority: 27.12.2022 JP 2022210619; 04.10.2023 JP 2023173227
(71) Applicant: Dai Nippon Printing Co., Ltd., Tokyo 162-8001 (JP)
(72) Inventor: UEKI, Takayuki, Tokyo 162-8001 (JP)
(74) Representative: Müller-Boré & Partner Patentanwälte PartG mbB
(86) International application number: PCT/JP2023/046505
(87) International publication number: WO 2024/143301

(57) **Abstract**

A transfer film includes a support layer and a transfer layer peelable from the support layer. The support layer includes at least a first polyolefin layer containing a polyolefin as a primary component, the transfer layer includes at least a barrier resin layer containing at least one gas barrier resin as a primary component and a thin-film layer containing a metal and/or an inorganic oxide, and the first polyolefin layer and the barrier resin layer are in contact with each other.

## Description

### Cross-Reference to Related Applications

The present application claims priority based on Japanese Patent Application 2022-210619, filed December 27, 2022, and Japanese Patent Application 2023-173227, filed October 4, 2023, the disclosure of which is hereby incorporated as part of the disclosure of the present description by reference in their entirety.

### Technical Field

The present disclosure relates to a transfer film.

### Background Art

As a way to impart gas barrier properties to materials such as packaging materials, the provision of a thin-film layer containing a metal and/or an inorganic oxide on a substrate included in, for example, a packaging material has been investigated. In recent years, furthermore, environmental issues caused by microplastics have gained significant attention. The field of packaging materials, for example, is also facing a need to improve recyclability by using a paper substrate as the substrate to reduce environmental impacts. Paper substrates generally have insufficient gas barrier properties. To address this, the provision of a thin-film layer as described above on a paper substrate to enhance the gas barrier properties of packaging materials including a paper substrate has been investigated.

As is the case with a paper substrate, however, it may be difficult to provide a thin-film layer, such as a deposition film, directly on the substrate, depending on the type of substrate (see, for example, PTL 1). This approach has significantly affected quality consistency, for example due to price increases caused by processing-related losses and process instability.

A current measure to address this is the use of a transfer film that includes a release film and a thin-film layer as described above. The release film includes a polyethylene terephthalate film (PET film) and a release layer, and the thin-film layer is provided on the release layer (hereinafter also referred to as a "PET film for thin-film layer transfer"). Using this transfer film, the thin-film layer is transferred onto a substrate without processing-related losses and with consistent quality. This enables the provision of a thin-film layer even on a substrate on which direct formation of a thin-film layer is difficult.

### Citation List

### Patent Literature

PTL 1: Japanese Patent No. 4622201

### Summary of Invention

### Technical Problem

In the thin-film layer transfer technology using a PET film for thin-film layer transfer, not only is the thin-film layer transferred to the substrate serving as the transfer substrate, but the release layer for easy peeling is also transferred together. This technology, therefore, may affect the characteristics of the resulting product. In terms of the improvement of gas barrier properties, furthermore, there has been little hope of synergy between the release layer and the thin-film layer.

An object of the present disclosure is to provide a transfer film that enables the provision of a thin-film layer on a substrate serving as a transfer substrate by transfer technology and with which a barrier laminate having high gas barrier properties can be manufactured.

### Solution to Problem

A form of a transfer film according to the present disclosure includes a support layer and a transfer layer peelable from the support layer, wherein the support layer includes at least a first polyolefin layer containing a polyolefin as a primary component, the transfer layer includes at least a barrier resin layer containing at least one gas barrier resin as a primary component and a thin-film layer containing a metal and/or an inorganic oxide, and the first polyolefin layer and the barrier resin layer are in contact with each other.

### Advantageous Effects of Invention

According to the present disclosure, there can be provided a transfer film that enables the provision of a thin-film layer as described above on a substrate serving as a transfer substrate, a paper substrate in particular, by transfer technology and with which a barrier laminate having high gas barrier properties can be manufactured.

### Brief Description of Drawings

[Fig. 1] Fig. 1 is a schematic cross-sectional view of an embodiment of a transfer film according to the present disclosure.
[Fig. 2] Fig. 2 is a schematic cross-sectional view of an embodiment of a transfer film according to the present disclosure.
[Fig. 3] Fig. 3 is a schematic cross-sectional view of an embodiment of a transfer film according to the present disclosure.
[Fig. 4] Fig. 4 is a schematic cross-sectional view of an embodiment of a transfer film according to the present disclosure.
[Fig. 5] Fig. 5 is a schematic cross-sectional view of an embodiment of a barrier laminate according to the present disclosure.
[Fig. 6] Fig. 6 is a schematic cross-sectional view of an embodiment of a barrier laminate according to the present disclosure.
[Fig. 7] Fig. 7 is a schematic cross-sectional view of an embodiment of a barrier laminate according to the present disclosure.

### Description of Embodiments

Embodiments of the present disclosure will now be described in detail. The present disclosure can be implemented in numerous different forms and is not to be construed as limited to the descriptions in the embodiments illustrated below. The drawings may be presented schematically, for example in terms of the width, thickness, and shape of layers, compared to the embodiments to make the descriptions clearer, but they are merely examples and do not limit the interpretation of the present disclosure. Herein and in each drawing, elements similar to those already described in relation to a previously mentioned drawing may be assigned the same reference sign, and their detailed descriptions may be omitted as appropriate.

When multiple candidate upper limits and multiple candidate lower limits are listed for a certain parameter in the present disclosure, the numerical range of that parameter may be constituted by pairing any one candidate upper limit with any one candidate lower limit. Examples of such parameters include physical characteristics, the percentages of components, and the thickness of layers. As an example, the following statement is described: "Parameter B is preferably A1 or more, more preferably A2 or more, even more preferably A3 or more. Parameter B is preferably A4 or less, more preferably A5 or less, even more preferably A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

In each category of components that appear in the following description herein (e.g., polyethylene, polypropylene, and other polyolefins, α-olefins, gas barrier resins and other resin materials, and additives), one component in that category may be used, or two or more may be used.

As used herein, the "primary component" in a given layer refers to the component whose percentage in that layer is more than 50% by mass, preferably 60% by mass or more, more preferably 70% by mass or more, even more preferably 80% by mass or more.

### [Transfer Film]

A transfer film according to the present disclosure includes:
a support layer; and
a transfer layer peelable from the support layer.

The transfer film according to the present disclosure includes at least:
a first polyolefin layer containing a polyolefin as a primary component;
a barrier resin layer containing at least one gas barrier resin as a primary component; and
a thin-film layer containing a metal and/or an inorganic oxide
in this order.

The first polyolefin layer is in contact with the barrier resin layer.

The support layer includes at least the first polyolefin layer.

The transfer layer includes at least the barrier resin layer and the thin-film layer.

By using the transfer film according to the present disclosure, the transfer layer can be transferred onto a substrate. Specifically, the transfer film according to the present disclosure is placed on the substrate, for example with a bonding layer interposed therebetween, and then the support layer included in the transfer film is peeled away from the transfer layer. In such a manner, a barrier laminate including a substrate and a transfer layer placed on the substrate can be obtained. The transfer layer includes a barrier resin layer and a thin-film layer. The barrier laminate, therefore, is superior in gas barrier properties based on the barrier resin layer and the thin-film layer.

The barrier resin layer has a first surface and a second surface opposite the first surface. The first polyolefin layer is provided on the first surface of the barrier resin layer and preferably is in contact with the first surface of the barrier resin layer. The barrier resin layer usually has higher polarity compared with the polyolefin layer. Because the first polyolefin layer and the barrier resin layer have a difference in polarity, the first polyolefin layer can be easily peeled away from the barrier resin layer. The first surface of the barrier resin layer, therefore, is usually the release surface used when the support layer is peeled away from the transfer layer.

The transfer film does not include a bonding layer, such as an adhesive resin layer, between the first polyolefin layer and the barrier resin layer. Such a transfer film is superior in the peelability of the first polyolefin layer from the barrier resin layer by virtue of the difference in polarity between the first polyolefin layer and the barrier resin layer.

The thin-film layer is provided on the second surface of the barrier resin layer and preferably is in contact with the second surface of the barrier resin layer. The transfer layer is superior in, for example, gas barrier properties because it includes a thin-film layer on a high-polarity barrier resin layer.

The film consisting of the support layer obtained by peeling the support layer away from the transfer layer of the transfer film according to the present disclosure is also referred to as a "peeled film." The percentage of polyolefins in the support layer (peeled film) is preferably more than 50% by mass, more preferably 60% by mass or more, even more preferably 70% by mass or more, still more preferably 80% by mass or more, particularly preferably 90% by mass or more. In an embodiment, it is desirable that the percentage of polyethylene in the support layer (peeled film) be equal to or higher than these lower limits.

In known easy-peel transfer technologies, a release film including a PET film and a release layer is used as a support substrate for a thin-film layer. The PET film after transfer peeling is usually discarded, leading to increased costs or environmental impacts. When the support layer of the transfer film according to the present disclosure, which corresponds to the support substrate, contains polyolefins in an amount equal to or greater than the lower limits specified above, the peeled film can be easily recycled and can also be reused into the support layer. In addition, when the support layer has undergone stretching treatment, which will be described later, the peeled film can also be reused as a polyethylene stretched substrate constituting a packaging material.

The support layer may further include one or two or more second polyolefin layers. In this arrangement, the one or two or more second polyolefin layers are provided on the surface of the first polyolefin layer opposite the surface facing the barrier resin layer.

That is, the transfer film according to the present disclosure may include at least:
one or two or more second polyolefin layers;
a first polyolefin layer;
a barrier resin layer; and
a thin-film layer containing a metal and/or an inorganic oxide
in this order.

Each layer included in the transfer film will now be described in detail.

### <Barrier Resin Layer>

The barrier resin layer contains at least one gas barrier resin as its primary component. The barrier resin layer is superior in gas barrier properties, such as oxygen barrier properties and water vapor barrier properties. A barrier laminate obtained by transferring the transfer layer, which includes the barrier resin layer, onto a substrate (transfer substrate), therefore, is superior in gas barrier properties.

The gas barrier resin is, for example, a heteroatom-containing resin. Examples of heteroatoms that can be in the heteroatom-containing resin include an oxygen atom, a sulfur atom, a nitrogen atom, and a chlorine atom. The heteroatom-containing resin has a heteroatom-containing group, such as a hydroxy group, an amide linkage, an ester linkage, a urethane linkage, an imide group, a nitrile group, or a chlorine atom. Examples of gas barrier resins include modified ethylene polymers, such as ethylene-vinyl alcohol copolymers, polyvinyl alcohol, and polyvinylidene chloride, polyamides, polyesters, polyether polyols, polyester polyols, polyurethanes, polyacrylonitrile, and (meth)acrylic resins. Gas barrier resins are usually resins exhibiting higher polarity compared with polyolefins. Of these, modified ethylene polymers are particularly preferred from viewpoints such as gas barrier properties, with ethylene-vinyl alcohol copolymers and polyvinyl alcohol being more preferred. Polyamides, furthermore, are also preferred.

The melt flow rate (MFR) of the gas barrier resin is preferably 0.1 g/10 minutes or more, more preferably 0.3 g/10 minutes or more, even more preferably 0.5 g/10 minutes or more, for workability reasons. The MFR of the gas barrier resin is preferably 30 g/10 minutes or less, more preferably 20 g/10 minutes or less, even more preferably 10 g/10 minutes or less, particularly preferably 5 g/10 minutes or less, for film formation (e.g., coextrudability) reasons. The MFR of the gas barrier resin is measured using method A under the conditions of a temperature of 190°C and a load of 2.16 kg according to JIS K7210-1: 2014. The measurement temperature may be 210°C, depending on the melting point of the gas barrier resin.

From the viewpoint of coextrudability, it is preferred to use a gas barrier resin with an MFR of 30 g/10 minutes or less as a resin material constituting the barrier resin layer while using a polyolefin with an MFR of 30 g/10 minutes or less as a resin material constituting the polyolefin layer, which will be described later.

An ethylene-vinyl alcohol copolymer (hereinafter also referred to as an "EVOH") is obtained by, for example, copolymerizing ethylene and a vinyl ester monomer and then saponifying the resulting copolymer. The copolymerization of ethylene and a vinyl ester monomer can be performed by any known polymerization process, such as solution polymerization, suspension polymerization, or emulsion polymerization.

The vinyl ester monomer is typically vinyl acetate, but other vinyl ester monomers may also be used. Examples of such vinyl ester monomers include aliphatic vinyl esters, such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters, such as vinyl benzoate.

In the EVOH, the percentage of ethylene-derived constituent units (ethylene content) is preferably 50 mol% or less, more preferably 48 mol% or less, even more preferably 44 mol% or less, still more preferably 40 mol% or less, particularly preferably 35 mol% or less, for the gas barrier properties of the transfer layer. When the ethylene content of the EVOH is equal to or lower than the upper limits, furthermore, the difference in polarity between the first polyolefin layer and the barrier resin layer is large, resulting in improved peelability of the support layer. The ethylene content of the EVOH may be 10 mol% or more, may be 15 mol% or more, may be 20 mol% or more, or may be 25 mol% or more for the ease of formation of the transfer film. The ethylene content is measured by NMR.

The average degree of saponification of the EVOH is preferably 90 mol% or more, more preferably 95 mol% or more, even more preferably 99 mol% or more. The average degree of saponification is measured according to JIS K6726: 1994 (using a solution in which the EVOH is uniformly dissolved in a water/methanol solvent).

The melting point (Tm) of the EVOH is preferably 140°C or above, more preferably 150°C or above, even more preferably 160°C or above, particularly preferably 170°C or above, for heat resistance reasons. The Tm of the EVOH is preferably 200°C or below, more preferably 195°C or below, even more preferably 190°C or below. Herein, the Tms of materials are melt peak temperatures obtained by differential scanning calorimetry (DSC) according to JIS K7121: 2012 (using a test specimen after conditioning as per 3. (2) (with the cooling rate being 10°C/minute)).

The EVOH may have been modified, for example through urethanization, acetalation, cyanoethylation, or oxyalkylenation, by known methods.

The average degree of saponification of polyvinyl alcohol (hereinafter also referred to as "PVA") is preferably 70 mol% or more, more preferably 75 mol% or more, even more preferably 80 mol% or more, particularly preferably 85 mol% or more, 90 mol% or more, or 95 mol% or more. The average degree of saponification is measured according to JIS K6726: 1994. PVA exhibits higher water solubility with increasing average degree of saponification. The recycling treatment of paper products usually uses water. When a barrier laminate that includes a paper substrate as its substrate is subjected to a recycling treatment using water, for example, PVA with a high average degree of saponification can be easily dissolved in water. A barrier laminate that includes a barrier resin layer containing such PVA, therefore, is superior in recyclability.

The melting point (Tm) of the PVA is preferably 140°C or above, more preferably 150°C or above, even more preferably 160°C or above, particularly preferably 170°C or above, for heat resistance reasons. The Tm of the PVA is preferably 200°C or below, more preferably 195°C or below, even more preferably 190°C or below.

Examples of polyamides include aliphatic polyamides and semi-aromatic polyamides. For polyamides, aliphatic polyamides are preferred, and crystalline aliphatic polyamides are more preferred.

Examples of aliphatic polyamides include aliphatic homopolyamides and aliphatic copolyamides. In the following list of examples, a polyamide will also be referred to as "PA."

Specific examples of aliphatic homopolyamides include polycaprolactam or poly(6-aminocaproic acid) (PA6), polyenantholactam or poly(7-aminoenanthic acid) (PA7), polyundecanelactam or poly(11-aminoundecanoic acid) (PA11), polylauryl lactam or poly(12-aminolauric acid) (PA12), polyhexamethylene adipamide (PA66), polytetramethylene dodecamide (PA412), polypentamethylene azelamide (PA59), polypentamethylene sebacamide (PA510), polypentamethylene dodecamide (PA512), polyhexamethylene azelamide (PA69), polyhexamethylene sebacamide (PA610), polyhexamethylene dodecamide (PA612), polynonamethylene adipamide (PA96), polynonamethylene azelamide (PA99), polynonamethylene sebacamide (PA910), polynonamethylene dodecamide (PA912), polydecamethylene adipamide (PA106), polydecamethylene azelamide (PA109), polydecamethylene decamide (PA1010), polydecamethylene dodecamide (PA1012), polydodecamethylene adipamide (PA126), polydodecamethylene azelamide (PA129), polydodecamethylene sebacamide (PA1210), and polydodecamethylene dodecamide (PA1212).

Specific examples of aliphatic copolyamides include caprolactam/hexamethylenediaminoadipic acid copolymers (PA6/66), caprolactam/hexamethylenediaminoazelaic acid copolymers (PA6/69), caprolactam/hexamethylenediaminosebacic acid copolymers (PA6/610), caprolactam/hexamethylenediaminoundecanoic acid copolymers (PA6/611), caprolactam/hexamethylenediaminododecanoic acid copolymers (PA6/612), caprolactam/aminoundecanoic acid copolymers (PA6/11), caprolactam/lauryl lactam copolymers (PA6/12), caprolactam/hexamethylenediaminoadipic acid/lauryl lactam copolymers (PA6/66/12), caprolactam/hexamethylenediaminoadipic acid/hexamethylenediaminosebacic acid copolymers (PA6/66/610), and caprolactam/hexamethylenediaminoadipic acid/hexamethylenediaminododecanedicarboxylic acid copolymers (PA6/66/612).

The relative viscosity of an aliphatic polyamide is preferably 1.5 or greater, more preferably 2.0 or greater, even more preferably 2.5 or greater, and preferably is 5.0 or less, more preferably 4.5 or less, even more preferably 4.0 or less. The relative viscosity of an aliphatic polyamide is determined by dissolving 1 g of the polyamide in 100 mL of 96% concentrated sulfuric acid and measuring the relative viscosity at 25°C according to JIS K6920-2: 2009.

A semi-aromatic polyamide is a polyamide having constituent units derived from an aromatic diamine and constituent units derived from an aliphatic dicarboxylic acid or a polyamide having constituent units derived from an aliphatic diamine and constituent units derived from an aromatic dicarboxylic acid. Examples include polyamides composed of an aromatic diamine and an aliphatic dicarboxylic acid and polyamides composed of an aliphatic diamine and an aromatic dicarboxylic acid.

Examples of semi-aromatic polyamides include polyhexamethylene terephthalamide (PA6T), polyhexamethylene isophthalamide (PA6I), polynonamethylene terephthalamide (PA9T), polyhexamethylene adipamide/polyhexamethylene terephthalamide copolymers (PA66/6T), polyhexamethylene adipamide/polyhexamethylene isophthalamide copolymers (PA66/6I), polyhexamethylene terephthalamide/polycaproamide copolymers (PA6T/6), polyhexamethylene isophthalamide/polycaproamide copolymers (PA6I/6), polyhexamethylene terephthalamide/polydodecamide copolymers (PA6T/12), polyhexamethylene isophthalamide/polyhexamethylene terephthalamide copolymers (PA6I/6T), polyhexamethylene terephthalamide/poly(2-methylpentamethylene terephthalamide) copolymers (PA6T/M5T), polyhexamethylene adipamide/polyhexamethylene terephthalamide/polyhexamethylene isophthalamide copolymers (PA66/6T/6I), polyhexamethylene adipamide/polycaproamide/polyhexamethylene isophthalamide copolymers (PA66/6/6I), and polymetaxylylene adipamide (PAMXD6).

The melt volume rate (MVR) of a semi-aromatic polyamide is preferably 5 cm³/10 minutes or more, more preferably 10 cm³/10 minutes or more, and preferably is 200 cm³/10 minutes or less, more preferably 100 cm³/10 minutes or less. For example, the melt volume rate is 5 cm³/10 minutes or more and 200 cm³/10 minutes or less. The MVR is measured at a temperature of 275°C and a load of 5.00 kg according to JIS K7210-1: 2014.

For polyamides, crystalline aliphatic polyamides are preferred. Examples of crystalline aliphatic polyamides include PA6, PA11, PA12, PA66, PA610, PA612, PA6/66, and PA6/66/12. The melting point (Tm) of a crystalline aliphatic polyamide is preferably 180°C or above, more preferably 190°C or above, even more preferably 200°C or above, and preferably is 300°C or below, more preferably 270°C or below, even more preferably 240°C or below.

The MFR of a polyamide is preferably 0.1 g/10 minutes or more, more preferably 1 g/10 minutes or more, even more preferably 1.5 g/10 minutes or more, and preferably is 50 g/10 minutes or less, more preferably 30 g/10 minutes or less, even more preferably 10 g/10 minutes or less. For example, the MFR is 0.1 g/10 minutes or more and 50 g/10 minutes or less. The MFR of a polyamide is measured using method A under the conditions of a temperature of 235°C and a load of 2.16 kg according to JIS K7210-1: 2014. An appropriate measurement temperature can be employed according to the melting point of the polyamide.

The percentage of the gas barrier resin in the barrier resin layer is preferably more than 50% by mass, more preferably 60% by mass or more, even more preferably 70% by mass or more, still more preferably 80% by mass or more, particularly preferably 90% by mass or more, for the physical characteristics mentioned above, such as gas barrier properties.

The barrier resin layer may contain additives. Examples of additives include crosslinking agents, antioxidants, ultraviolet absorbers, photostabilizers, anti-blocking agents, slipping agents, filler agents, reinforcing agents, antistatic agents, compatibilizers, pigments, and reforming resins.

The transfer layer may include one barrier resin layer or may include two or more. When the transfer layer includes two or more barrier resin layers, the transfer layer is preferably free of other layers, such as a polyolefin layer, between the barrier resin layers so that unintended interlayer delamination is reduced.

When the transfer layer includes two or more barrier resin layers, the first surface of the barrier resin layers refers to the surface of the multiple barrier resin layers that is closest to the first polyolefin layer, and the second surface refers to the surface of the multiple barrier resin layers that is closest to the thin-film layer. For example, when the transfer film includes the first polyolefin layer, a first barrier resin layer, a second barrier resin layer, and the thin-film layer in this order, the first surface refers to the surface of the first barrier resin layer facing the first polyolefin layer, and the second surface refers to the surface of the second barrier resin layer facing the thin-film layer.

The thickness of the barrier resin layer is preferably 10 µm or less, more preferably 8 µm or less, even more preferably 6 µm or less, particularly preferably 3 µm or less, for the resistance to bending of the transfer layer. The thickness of the barrier resin layer is preferably 0.3 µm or more, more preferably 0.5 µm or more, even more preferably 1 µm or more, for the physical characteristics mentioned above, such as gas barrier properties. When the transfer layer includes two or more barrier resin layers, this thickness refers to the sum of the thickness of each barrier resin layer.

In general, gas barrier properties often depend on the thickness of the barrier material. The transfer layer in the present disclosure, however, includes a thin-film layer on a barrier resin layer. The transfer layer, therefore, can exhibit high gas barrier properties even with a thin barrier resin layer, without significantly depending on the thickness of the barrier resin layer, allowing high gas barrier properties to be imparted to the substrate serving as the transfer substrate. In addition, a transfer layer that includes a thin-film layer on a thin barrier resin layer has high resistance to bending. With such a transfer layer, therefore, the resistance to bending of a barrier laminate, which will be described later, can be increased. In this context, high resistance to bending means that gas barrier properties after bending are superior.

The peel strength between the first polyolefin layer and the barrier resin layer is preferably 0.5 N/15 mm width or less, more preferably 0.4 N/15 mm width or less, even more preferably 0.3 N/15 mm width or less. In the case of a transfer film having such a peel strength, the transfer layer can be easily transferred from the support layer to the substrate serving as the transfer substrate. This peel strength is, for example, 0.01 N/15 mm width or more.

This peel strength is measured under the following conditions: peel angle, T-peel; test speed, 50 mm/min. Specifically, an intermediate laminate prepared under the conditions specified in the Examples section is sliced to cut out test specimens having the following size: width, 15 mm; length, 100 mm. One end in the length direction of the support layer of each test specimen is peeled off. The end portion of the partially peeled support layer (peeled film) is attached to one clamp of a tensile tester, and the end portion of the laminate after the partial peeling, now consisting of the transfer layer, an adhesive agent layer, and a substrate, is attached to the other clamp of the tensile tester. The initial chuck distance is set to 100 mm. Then the clamp to which the end portion of the peeled film is attached is pulled at a rate of 50 mm/min under the T-peel conditions, and the maximum force (N) is measured. The maximum force (N) measured for 15-mm wide test specimens is defined as the peel strength (N/15 mm width). The test conditions other than those specified above follow JIS K6854-3: 1999.

### <First Polyolefin Layer>

The first polyolefin layer is provided on the barrier resin layer such that it can be peeled away from the barrier resin layer. The barrier resin layer and the thin-film layer, therefore, constitute the transfer layer. The first polyolefin layer is preferably in contact with the barrier resin layer.

The first polyolefin layer contains a polyolefin as its primary component. Examples of polyolefins include polyethylene, polypropylene, and polymethylpentene. The first polyolefin layer is preferably a polyethylene layer containing polyethylene as its primary component, a polypropylene layer containing polypropylene as its primary component, or a layer containing a mixed resin of polyethylene and polypropylene as its primary component, more preferably the polyethylene layer or polypropylene layer.

The MFR of the polyolefin is preferably 0.1 g/10 minutes or more, more preferably 0.3 g/10 minutes or more, even more preferably 0.5 g/10 minutes or more, for workability reasons. The MFR of the polyolefin is preferably 30 g/10 minutes or less, more preferably 20 g/10 minutes or less, even more preferably 10 g/10 minutes or less, particularly preferably 5 g/10 minutes or less, for film formation (e.g., coextrudability) reasons. The MFR of the polyolefin is measured using method A under the condition of a load of 2.16 kg according to JIS K7210-1: 2014. The measurement temperature for the MFR is selected according to, for example, the melting point of the polyolefin. In the case of polyethylene, the measurement temperature is 190°C, and in the case of polypropylene, the measurement temperature is 230°C.

The percentage of the polyolefin in the first polyolefin layer is preferably more than 50% by mass, more preferably 60% by mass or more, even more preferably 70% by mass or more, still more preferably 80% by mass or more, particularly preferably 90% by mass or more.

The first polyolefin layer may contain a mechanically recycled or chemically recycled polyolefin (hereinafter also referred to as a "recycled polyolefin"). Mechanical recycling and chemical recycling will be described later. The first polyolefin layer may contain more than 50% by mass recycled polyolefin or may contain 60% by mass or more, 70% by mass or more, 80% by mass or more, or 90% by mass or more recycled polyolefin.

The first polyolefin layer may contain resin materials other than polyolefins. Examples of such resin materials include (meth)acrylic resins, vinyl resins, cellulose resins, polyamides, polyesters, and ionomer resins.

The first polyolefin layer may contain additives as mentioned above.

The thickness of the first polyolefin layer is preferably 0.5 µm or more, more preferably 1 µm or more, even more preferably 2 µm or more, for the strength and heat resistance of the transfer film and the recyclability of the peeled film. The thickness of the first polyolefin layer is preferably 20 µm or less, more preferably 15 µm or less, even more preferably 10 µm or less, for the workability of the transfer film.

### (Polyethylene Layer)

A polyethylene layer as the first polyolefin layer contains polyethylene as its primary component. As used herein, polyethylene refers to a polymer in which the percentage of ethylene-derived constituent units in all repeating constituent units is more than 50 mol%. In this polymer, the percentage of ethylene-derived constituent units is preferably 70 mol% or more, more preferably 80 mol% or more, even more preferably 90 mol% or more, particularly preferably 95 mol% or more. This percentage is measured by NMR.

Herein, polyethylene may be a homopolymer of ethylene or may be a copolymer of ethylene and an ethylenically unsaturated monomer other than ethylene. Examples of ethylenically unsaturated monomers other than ethylene include α-olefins containing 3 or more and 20 or fewer carbons, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene, vinyl monomers, such as vinyl acetate and vinyl propionate, and (meth)acrylates, such as methyl (meth)acrylate and ethyl (meth)acrylate. For α-olefins, α-olefins containing 3 or more and 12 or fewer carbons are preferred, and α-olefins containing 3 or more and 8 or fewer carbons are more preferred.

For the copolymer, examples include ethylene-1-butene copolymers, in which at least 1-butene serves as a co-monomer, ethylene-1-hexene copolymers, in which at least 1-hexene serves as a co-monomer, and ethylene-1-octene copolymers, in which at least 1-octene serves as a co-monomer. In these copolymers, the specified co-monomers are not the only ones; additional co-monomers may also be used.

Herein, examples of polyethylene include high-density polyethylene, medium-density polyethylene, low-density polyethylene, and linear low-density polyethylene, as well as ethylene-vinyl acetate copolymers and ethylene-(meth)acrylate copolymers.

Herein, the densities of types of polyethylene are as follows.

The density of high-density polyethylene is preferably 0.945 g/cm³ or more. The density of high-density polyethylene is preferably 0.965 g/cm³ or less. The density of medium-density polyethylene is preferably 0.930 g/cm³ or more and less than 0.945 g/cm³. The density of low-density polyethylene is preferably 0.860 g/cm³ or more and less than 0.930 g/cm³, more preferably 0.900 g/cm³ or more and less than 0.930 g/cm³. The density of linear low-density polyethylene is preferably 0.860 g/cm³ or more and less than 0.930 g/cm³, more preferably 0.900 g/cm³ or more and less than 0.930 g/cm³. The density of polyethylene is measured according to method D (density gradient column method, 23°C) in JIS K7112: 1999.

Low-density polyethylene is a type of polyethylene obtained by, for example, polymerizing ethylene by high-pressure polymerization (high-pressure low-density polyethylene). Linear low-density polyethylene is a type of polyethylene obtained by polymerizing ethylene and a small amount of α-olefin by a polymerization process using a multi-site catalyst, such as a Ziegler-Natta catalyst, or a single-site catalyst, such as a metallocene catalyst. Examples of linear low-density polyethylene (LLDPE) include ethylene-1-butene copolymers (C4-LLDPE), in which at least 1-butene serves as a co-monomer, ethylene-1-hexene copolymers (C6-LLDPE), in which at least 1-hexene serves as a co-monomer, and ethylene-1-octene copolymers (C8-LLDPE), in which at least 1-octene serves as a co-monomer. In these copolymers, the specified co-monomers are not the only ones; additional co-monomers may also be used.

The melting point (Tm) of the polyethylene is preferably 100°C or above, more preferably 110°C or above, even more preferably 120°C or above. The Tm of the polyethylene is preferably 140°C or below.

Types of polyethylene with varying density or branching can be obtained by selecting the polymerization method as appropriate. For example, it is preferred to perform the polymerization through a single-step process or a multistep process, including two or more steps, by any of the gas-phase polymerization, slurry polymerization, solution polymerization, and high-pressure ion polymerization methods using a multi-site catalyst, such as a Ziegler-Natta catalyst, or a single-site catalyst, such as a metallocene catalyst.

Herein, polyethylene may be biomass-derived polyethylene (hereinafter also referred to as "biomass polyethylene"). That is, materials including biomass-derived ethylene may be used as raw materials for obtaining polyethylene instead of materials including ethylene derived from a fossil fuel. Biomass polyethylene is a carbon-neutral material; with biomass polyethylene, therefore, the environmental impacts of the laminate or packaging container can be reduced. Biomass polyethylene can be manufactured using, for example, the methods described in Japanese Unexamined Patent Application Publication No. 2013-177531. Commercially available biomass polyethylene may also be used.

Herein, polyethylene may be mechanically recycled or chemically recycled polyethylene (hereinafter also referred to as "recycled polyethylene"). With this arrangement, the environmental impacts of the laminate or packaging container can be reduced. Mechanical recycling is, in general, a method in which collected polyethylene films, for example, are crushed, the resulting fragments are washed with alkalis for the removal of stains and foreign matters on the surface of the films, and then the fragments are dried for a certain period of time at high temperatures under reduced pressure for decontamination through the diffusion of contaminants residing inside the films, through which stains on the films are removed, and the films are returned to polyethylene. Chemical recycling is, in general, a method in which collected polyethylene films, for example, are decomposed to the monomer level, and the monomers are polymerized again to give polyethylene.

The above description of polyethylene can also be applied to polyethylene contained in other layers.

A polyethylene layer as the first polyolefin layer is, for example, a layer containing polyethylene having a density of 0.930 g/cm³ or more as its primary component or a layer containing polyethylene having a density of less than 0.930 g/cm³ as its primary component.

A polyethylene layer as the first polyolefin layer preferably contains polyethylene having a density of 0.930 g/cm³ or more as its primary component, more preferably contains polyethylene having a density of 0.940 g/cm³ or more as its primary component, and even more preferably contains polyethylene having a density of 0.945 g/cm³ or more as its primary component. Such a polyethylene layer is better in terms of peelability from the barrier resin layer compared with a layer containing polyethylene having a density of less than 0.930 g/cm³ as its primary component.

Examples of polyethylene layers that can be used as the first polyolefin layer include a layer containing low-density polyethylene as its primary component, a layer containing linear low-density polyethylene as its primary component, a layer containing medium-density polyethylene as its primary component, a layer containing a mixed resin of medium-density polyethylene and high-density polyethylene as its primary component, and a layer containing high-density polyethylene as its primary component.

A polyethylene layer as the first polyolefin layer is preferably a layer containing medium-density polyethylene as its primary component, a layer containing a mixed resin of medium-density polyethylene and high-density polyethylene as its primary component, or a layer containing high-density polyethylene as its primary component, more preferably a layer containing high-density polyethylene as its primary component. Such polyethylene layers are better in terms of peelability from the barrier resin layer compared with a layer containing low-density polyethylene or linear low-density polyethylene as its primary component.

The percentage of polyethylene having such a density as specified above in a polyethylene layer as the first polyolefin layer is preferably more than 50% by mass, more preferably 60% by mass or more, even more preferably 70% by mass or more, still more preferably 80% by mass or more, particularly preferably 90% by mass or more.

### (Polypropylene Layer)

A polypropylene layer as the first polyolefin layer contains polypropylene as its primary component. The polypropylene may be any of a propylene homopolymer (homopolypropylene), a propylene random copolymer (random polypropylene), or a propylene block copolymer (block polypropylene) or may be a mixture of two or more types selected from these. The polypropylene may be biomass-derived polypropylene or mechanically recycled or chemically recycled polypropylene for reduced environmental impacts. A layer containing random polypropylene tends to achieve higher adhesive strength to the barrier resin layer than a layer containing homopolypropylene.

A polypropylene layer tends to be superior in peelability from the barrier resin layer, a barrier resin layer containing an EVOH as its primary component in particular. Among types of polypropylene, isotactic polypropylene or syndiotactic polypropylene is more preferred than atactic polypropylene from the viewpoint of the peelability of the polypropylene layer from the barrier resin layer.

Propylene homopolymers are polymers composed solely of propylene. Propylene random copolymers are random copolymers of propylene and, for example, an α-olefin other than propylene. Propylene block copolymers are copolymers having a polymer block composed of at least propylene and a polymer block composed of at least, for example, an α-olefin other than propylene. Of these, propylene random copolymers are particularly preferred from the viewpoint of film formation.

Examples of α-olefins other than propylene include α-olefin containing 2 or more and 20 or fewer carbons. Specific examples include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene. For α-olefins, α-olefins containing 2 or more and 12 or fewer carbons are preferred, and α-olefins containing 2 or more and 8 or fewer carbons are more preferred.

The density of the polypropylene is, for example, 0.88 g/cm³ or more and 0.92 g/cm³ or less. The density of polypropylene is measured according to method D (density gradient column method, 23°C) in JIS K7112: 1999.

The melting point (Tm) of the polypropylene is preferably 120°C or above, more preferably 130°C or above, even more preferably 140°C or above, for the peelability of the polypropylene layer from the barrier resin layer. The Tm of the polypropylene is preferably 170°C or below.

The above description of polypropylene can also be applied to polypropylene contained in other layers.

The percentage of polypropylene in a polypropylene layer is preferably more than 50% by mass, more preferably 60% by mass or more, even more preferably 70% by mass or more, still more preferably 80% by mass or more, particularly preferably 90% by mass or more.

### <Second Polyolefin Layer(s)>

The support layer may further include a second polyolefin layer. The support layer may include one second polyolefin layer or may include two or more. When the support layer includes a second polyolefin layer, the second polyolefin layer is located on the surface of the first polyolefin layer opposite the surface facing the barrier resin layer.

The composition of the second polyolefin layer may be identical to or may be different from the composition of the first polyolefin layer. The thickness of the second polyolefin layer may be identical to or may be different from the thickness of the first polyolefin layer. When the support layer includes two or more second polyolefin layers, the compositions of the multiple second polyolefin layers may be identical to or may be different from each other, and the thicknesses of the multiple second polyolefin layers may be equal to or may be different from each other.

The second polyolefin layer contains a polyolefin as its primary component. Examples of polyolefins include polyethylene, polypropylene, and polymethylpentene. The second polyolefin layer is preferably a polyethylene layer containing polyethylene as its primary component, a polypropylene layer containing polypropylene as its primary component, or a layer containing a mixed resin of polyethylene and polypropylene as its primary component, more preferably the polyethylene layer or polypropylene layer.

The details (such as specific examples, MFR, and Tm) of polyethylene, polypropylene, and other polyolefins are as described in detail in the First Polyolefin Layer section, and their description in this section is omitted.

The percentage of the polyolefin in the second polyolefin layer is preferably more than 50% by mass, more preferably 60% by mass or more, even more preferably 70% by mass or more, still more preferably 80% by mass or more, particularly preferably 90% by mass or more.

The second polyolefin layer may contain a recycled polyolefin. The second polyolefin layer may contain more than 50% by mass recycled polyolefin or may contain 60% by mass or more, 70% by mass or more, 80% by mass or more, or 90% by mass or more recycled polyolefin.

The second polyolefin layer may contain resin materials other than polyolefins. Examples of such resin materials include (meth)acrylic resins, vinyl resins, cellulose resins, polyamides, polyesters, and ionomer resins.

The second polyolefin layer may contain additives as mentioned above.

The transfer film may include, for example, layer 2-1, which contains medium-density polyethylene or a mixed resin of medium-density polyethylene and high-density polyethylene as its primary component, layer 2-2, which contains high-density polyethylene as its primary component, layer 2-3, which contains a mixed resin of medium-density polyethylene and linear low-density polyethylene as its primary component, a first polyolefin layer containing high-density polyethylene as its primary component, the barrier resin layer, and the thin-film layer in this order. Layer 2-1, layer 2-2, and layer 2-3 correspond to second polyolefin layers.

Layer 2-1 contains medium-density polyethylene as its primary component or contains a mixed resin of medium-density polyethylene and high-density polyethylene as its primary component. The ratio by mass between medium-density polyethylene and high-density polyethylene in the mixed resin may be from 10:90 to 90:10, may be from 20:80 to 80:20, may be from 30:70 to 70:30, or may be from 40:60 to 60:40. The medium-density polyethylene contributes to, for example, improving workability, such as the ease of film formation by inflation, and the surface condition of the multilayer film. The high-density polyethylene contributes to, for example, reducing the curling of the multilayer film.

Layer 2-2 contains high-density polyethylene as its primary component. The high-density polyethylene contributes to, for example, reducing the curling of the multilayer film.

Layer 2-3 contains a mixed resin of medium-density polyethylene and linear low-density polyethylene as its primary component. The ratio by mass between medium-density polyethylene and linear low-density polyethylene in the mixed resin may be from 10:90 to 90:10, may be from 20:80 to 80:20, may be from 30:70 to 70:30, or may be from 40:60 to 60:40. The linear low-density polyethylene contributes to, for example, improving workability. The medium-density polyethylene reduces the difference in density between layers, contributing to, for example, improving interlayer adhesion.

The transfer film may include, for example, layer 2-4, which contains medium-density polyethylene or a mixed resin of medium-density polyethylene and high-density polyethylene as its primary component, layer 2-5, which contains medium-density polyethylene as its primary component, layer 2-6, which contains a mixed resin of random polypropylene and linear low-density polyethylene as its primary component, a first polyolefin layer containing random polypropylene as its primary component, the barrier resin layer, and the thin-film layer in this order. Layer 2-4, layer 2-5, and layer 2-6 correspond to second polyolefin layers.

Layer 2-4 contains medium-density polyethylene as its primary component or contains a mixed resin of medium-density polyethylene and high-density polyethylene as its primary component. The ratio by mass between medium-density polyethylene and high-density polyethylene in the mixed resin may be from 10:90 to 90:10, may be from 20:80 to 80:20, may be from 30:70 to 70:30, or may be from 40:60 to 60:40. The medium-density polyethylene contributes to, for example, improving workability, such as the ease of film formation by inflation, and the surface condition of the multilayer film. The high-density polyethylene contributes to, for example, reducing the curling of the multilayer film.

Layer 2-5 contains medium-density polyethylene as its primary component. The medium-density polyethylene contributes to, for example, improving workability.

Layer 2-6 contains a mixed resin of random polypropylene and linear low-density polyethylene as its primary component. The ratio by mass between random polypropylene and linear low-density polyethylene in the mixed resin may be from 10:90 to 90:10, may be from 20:80 to 80:20, may be from 30:70 to 70:30, or may be from 40:60 to 60:40. The linear low-density polyethylene contributes to, for example, improving adhesion between layer 2-6 and layer 2-5. The random polypropylene contributes to, for example, improving adhesion between layer 2-6 and the first polyolefin layer. Random polypropylene tends to be superior in miscibility with metallocene linear low-density polyethylene.

The transfer film may include, for example, layer 2-7, which contains homopolypropylene as its primary component, layer 2-8, which contains homopolypropylene as its primary component, layer 2-9, which contains homopolypropylene as its primary component, a first polyolefin layer containing homopolypropylene or random polypropylene as its primary component, the barrier resin layer, and the thin-film layer in this order. Layer 2-7, layer 2-8, and layer 2-9 correspond to second polyolefin layers.

The transfer film may include, for example, layer 2-10, which contains linear low-density polyethylene as its primary component, layer 2-11, which contains linear low-density polyethylene as its primary component, layer 2-12, which contains linear low-density polyethylene as its primary component, a first polyolefin layer containing linear low-density polyethylene as its primary component, the barrier resin layer, and the thin-film layer in this order. Layer 2-10, layer 2-11, and layer 2-12 correspond to second polyolefin layers.

The percentage of the thickness of layer 2-1 or layer 2-4 is preferably 3% or more, more preferably 8% or more, even more preferably 13% or more, and preferably is 30% or less, more preferably 25% or less, even more preferably 20% or less, in relation to the total thickness of the second polyolefin layers.

The percentage of the thickness of layer 2-2 or layer 2-5 is preferably 5% or more, more preferably 10% or more, even more preferably 15% or more, and preferably is 35% or less, more preferably 30% or less, even more preferably 25% or less, in relation to the total thickness of the second polyolefin layers.

The percentage of the thickness of layer 2-3 or layer 2-6 is preferably 45% or more, more preferably 50% or more, even more preferably 55% or more, and preferably is 80% or less, more preferably 75% or less, even more preferably 70% or less, in relation to the total thickness of the second polyolefin layers.

The percentage of the thickness of layer 2-7 or layer 2-10 is preferably 1% or more, more preferably 3% or more, even more preferably 5% or more, and preferably is 20% or less, more preferably 15% or less, even more preferably 10% or less, in relation to the total thickness of the second polyolefin layers.

The percentage of the thickness of layer 2-8 or layer 2-11 is preferably 3% or more, more preferably 5% or more, even more preferably 7% or more, and preferably is 25% or less, more preferably 20% or less, even more preferably 15% or less, in relation to the total thickness of the second polyolefin layers.

The percentage of the thickness of layer 2-9 or layer 2-12 is preferably 55% or more, more preferably 65% or more, even more preferably 75% or more, and preferably is 96% or less, more preferably 92% or less, even more preferably 88% or less, in relation to the total thickness of the second polyolefin layers.

The thickness of the second polyolefin layer is preferably 2 µm or more, more preferably 5 µm or more, even more preferably 10 µm or more, for the strength and heat resistance of the transfer film and the recyclability of the peeled film. The thickness of the second polyolefin layer is preferably 100 µm or less, more preferably 75 µm or less, even more preferably 50 µm or less, for the workability of the transfer film. When the support layer includes two or more second polyolefin layers, this thickness refers to the sum of the thicknesses of the second polyolefin layers.

### <Thin-Film Layer>

The transfer film according to the present disclosure includes a thin-film layer containing a metal and/or an inorganic oxide on the second surface of the barrier resin layer. The thin-film layer is preferably in contact with the second surface of the barrier resin layer. Preferably, the thin-film layer has been formed directly on the second surface of the barrier resin layer by deposition.

As stated above, in known easy-peel transfer technologies, a release film including a PET film and a release layer is used as a support substrate for a thin-film layer. The release layer is usually of low polarity, and its adhesion to the thin-film layer tends not to be high. Accordingly, concerns arise regarding, for example, reduced stability and crack development in the thin-film layer after transfer, and the gas barrier properties may be insufficient in some cases. By contrast, the barrier resin layer described above has high polarity and thus presumably tends to be superior in adhesion to the thin-film layer. A barrier laminate that includes a thin-film layer on a barrier resin layer having high polarity, therefore, exhibits high gas barrier properties exceeding the intrinsic gas barrier values of the gas barrier resin, while also having high resistance to bending.

The thin-film layer contains a metal and/or an inorganic oxide. The thin-film layer may be a metal thin-film layer composed of one or two or more metals, or specifically a metal deposition film, or may be an inorganic oxide thin-film layer composed of one or two or more inorganic oxides, or specifically an inorganic oxide deposition film.

The thin-film layer is, for example, a metal deposition film or an inorganic oxide deposition film, such as a transparent deposition film.

Examples of metals include aluminum, chromium, tin, nickel, copper, silver, gold, and platinum. Examples of inorganic oxides include aluminum oxide, silicon oxide, magnesium oxide, calcium oxide, zirconium oxide, titanium oxide, boron oxide, hafnium oxide, barium oxide, and silicon oxycarbide (carbon-containing silicon oxide).

The thin-film layer is preferably an aluminum thin-film layer, such as an aluminum deposition film, an aluminum oxide thin-film layer, such as an aluminum oxide (alumina) deposition film, a silicon oxide thin-film layer, such as a silicon oxide (silica) deposition film, or a silicon oxycarbide thin-film layer, such as a silicon oxycarbide deposition film.

The thickness of the thin-film layer is preferably 50 Å or more, more preferably 100 Å or more, even more preferably 200 Å or more, still more preferably 300 Å or more, particularly preferably 400 Å or more, for gas barrier properties and aesthetic reasons. The thickness of the thin-film layer is preferably 1500 Å or less, more preferably 1300 Å or less, even more preferably 1000 Å or less, still more preferably 900 Å or more, particularly preferably 800 Å or less, for reduced development of cracks in the thin-film layer.

When the thin-film layer is an aluminum deposition film or other aluminum thin-film layer, the optical density (OD value) of the aluminum deposition film or other aluminum thin-film layer is preferably 1.0 or greater, more preferably 1.5 or greater, even more preferably 2.0 or greater, particularly preferably 2.5 or greater, and may be, for example, 3.5 or less. A transfer film including such a thin-film layer is superior in productivity in its manufacture. With such a transfer film, furthermore, good oxygen barrier properties and water vapor barrier properties can be imparted to the transfer substrate. The OD value can be measured according to JIS K7361-1: 1997.

The thin-film layer has preferably undergone surface treatment. Such a thin-film layer is superior in, for example, adhesion to the adjacent layer. Examples of methods for surface treatment include physical treatments and chemical treatments. Examples of physical treatments include corona treatment, ozonation, low-temperature plasma treatment using, for example, an oxygen gas and/or a nitrogen gas, and glow discharge treatment. Examples of chemical treatments include oxidation treatment using chemicals.

Examples of methods for forming the thin-film layer include Physical Vapor Deposition (PVD) methods, such as vacuum deposition, sputtering, and ion plating, and Chemical Vapor Deposition (CVD) methods, such as plasma chemical vapor deposition, thermal chemical vapor deposition, and optical chemical vapor deposition. The thin-film layer may be a composite film including two or more thin-film layers of different types formed using both physical vapor deposition and chemical vapor deposition in combination. Examples of heating means include resistance heating means, induction heating means, and electron beam heating means.

The thin-film layer may be single-layer, formed through one deposition step, or may be multilayer, formed through multiple deposition steps. When the thin-film layer is multilayer, each layer may be composed of identical components or may be composed of different components. Each layer may be formed using an identical method or may be formed using different methods.

### <Protective Layer>

The transfer film according to the present disclosure may further include a protective layer on the thin-film layer. That is, the transfer layer may further include a protective layer on the surface of the thin-film layer opposite the surface facing the barrier resin layer. Such a transfer layer is superior in, for example, oxygen barrier properties and water vapor barrier properties. When the thin-film layer is an inorganic oxide thin-film layer, furthermore, crack development in the thin-film layer can be effectively reduced with such a transfer layer.

The protective layer is, in an embodiment, a layer containing a gas barrier resin as described above.

The percentage of the gas barrier resin in the protective layer is preferably more than 50% by mass, more preferably 60% by mass or more, even more preferably 70% by mass or more, still more preferably 80% by mass or more, particularly preferably 90% by mass or more.

The protective layer may contain additives as mentioned above.

The thickness of a protective layer containing a gas barrier resin is preferably 0.01 µm or more, more preferably 0.1 µm or more, and preferably is 10 µm or less, more preferably 5 µm or less.

A protective layer containing a gas barrier resin can be formed by, for example, dissolving or dispersing the gas barrier resin and other materials in water or an appropriate organic solvent, applying the resulting coating liquid to the thin-film layer, and drying the applied liquid.

The protective layer is, in an embodiment, a gas barrier coating film obtained by mixing a metal alkoxide, a water-soluble polymer, and optionally a silane coupling agent and optionally adding water, an organic solvent, and a sol-gel catalyst, applying the resulting gas barrier composition to the thin-film layer, and drying the applied composition. The gas barrier coating film contains a hydrolysis and polycondensation product resulting from the hydrolysis and polycondensation of the metal alkoxide and other materials through the sol-gel process. By providing such a gas barrier coating film on the thin-film layer, crack development in the thin-film layer can be effectively reduced when the thin-film layer is an inorganic oxide thin-film layer.

Examples of metal alkoxides include alkoxysilanes, and specific examples include tetramethoxysilane, tetraethoxysilane, tetrapropoxysilane, and tetrabutoxysilane.

Examples of water-soluble polymers include hydroxyl-containing polymers, such as polyvinyl alcohol and ethylene-vinyl alcohol copolymers. Depending on the desired physical characteristics, such as oxygen barrier properties, water vapor barrier properties, water resistance, and weatherability, any one of polyvinyl alcohol or an ethylene-vinyl alcohol copolymer may be used, both may be used in combination, or a gas barrier coating film obtained using polyvinyl alcohol and a gas barrier coating film obtained using an ethylene-vinyl alcohol copolymer may be stacked. The amount of water-soluble polymer(s) used is preferably 5 parts by mass or more and 500 parts by mass or less per 100 parts by mass of the metal alkoxide.

The silane coupling agent can be a known organoalkoxysilane containing an organic reactive group. Organoalkoxysilanes having an epoxy group are preferred, with examples including γ-glycidoxypropyltrimethoxysilane, γ-glycidoxypropylmethyldiethoxysilane, and β-(3,4-epoxycyclohexyl)ethyltrimethoxysilane. The amount of silane coupling agent used is preferably 1 part by mass or more and 20 parts by mass or less per 100 parts by mass of the metal alkoxide.

The gas barrier composition may contain water, preferably in a proportion of 0.1 moles or more, more preferably 0.5 moles or more, preferably 100 moles or less, more preferably 60 moles or less, per mole of the metal alkoxide.

The gas barrier composition may contain an organic solvent. Examples of organic solvents include methyl alcohol, ethyl alcohol, n-propyl alcohol, isopropyl alcohol, and n-butyl alcohol.

The sol-gel catalyst is preferably an acid or an amine compound.

Examples of methods for applying the gas barrier composition include application means such as gravure roll coating and other types of roll coating, spray coating, spin coating, dipping, a brush, bar coating, and an applicator.

The thickness of the gas barrier coating film is preferably 0.01 µm or more, more preferably 0.1 µm or more, even more preferably 0.1 µm or more, and preferably is 100 µm or less, more preferably 50 µm or less, even more preferably 5 µm or less.

### <Bonding Layer>

The transfer film according to the present disclosure may include a bonding layer on the surface of the thin-film layer opposite the surface facing the barrier resin layer or on the surface of a protective layer opposite the surface facing the thin-film layer. The bonding layer is, in the method for manufacturing a barrier laminate described later, a layer for joining together the transfer substrate and the thin-film layer or protective layer. The transfer film may be free of a bonding layer. For example, a bonding layer may be provided on the transfer substrate.

The bonding layer is, in an embodiment, a layer that is in contact with the thin-film layer. In this embodiment, the bonding layer protects the thin-film layer. For example, when the transfer film is subjected to a bending load, the bonding layer reduces crack development in the thin-film layer. Even after microscopic cracks start to develop in the thin-film layer following the bending load, the bonding layer limits the decrease in gas barrier properties.

The details of the bonding layer are as described later, and their description in this section is omitted.

### <Multilayer Film>

The transfer film according to the present disclosure includes, in an embodiment, at least:
a multilayer film that includes at least the first polyolefin layer and the barrier resin layer; and
the thin-film layer located on the barrier resin layer.

The multilayer film includes at least the first polyolefin layer and the barrier resin layer. The barrier resin layer constitutes one surface layer of the multilayer film. The multilayer film may further include a second polyolefin layer. For example, the multilayer film may include, at least, one or two or more second polyolefin layers, the first polyolefin layer, and the barrier resin layer in this order. The details of each layer are as described above.

The multilayer film does not include a bonding layer, such as an adhesive resin layer, between the first polyolefin layer and the barrier resin layer. Such a multilayer film is superior in the peelability of the first polyolefin layer from the barrier resin layer by virtue of the difference in polarity between the first polyolefin layer and the barrier resin layer.

The number of layers in the multilayer film is two or more, preferably three or more, and preferably is nine or fewer, more preferably seven or fewer. Specifically, the number of layers in the multilayer film is three, five, seven, or nine.

The multilayer film may be a stretched film or may be a cast film. The multilayer film is preferably a stretched film, i.e., a film that has undergone stretching treatment. Through stretching treatment, the strength and heat resistance of the film, for example, can be improved, and, at the same time, the barrier resin layer can be formed as a thin film.

The stretching treatment may be uniaxial orientation or may be biaxial orientation. The stretch ratio when stretching is performed in the MD direction (the flow direction for the multilayer film) is preferably 2 or greater, more preferably 3 or greater, and preferably is 20 or less, more preferably 10 or less, even more preferably 7 or less. The stretch ratio when stretching is performed in the TD direction (the direction perpendicular to the MD direction) is preferably 2 or greater, more preferably 3 or greater, and preferably is 20 or less, more preferably 10 or less, even more preferably 7 or less.

The stretching treatment may be performed by the inline method, in which stretching is performed continuously after the film is shaped, or may be performed by the offline method, in which a cast film is rolled once, unrolled again, and stretched. For the stretching treatment, the inline method is preferred because it allows for easier control of the thickness of the multilayer film.

The multilayer film is, for example, a film that has undergone uniaxial orientation (a uniaxially oriented film) or a film that has undergone biaxial orientation (a biaxially oriented film). Specifically, the multilayer film may be a film that has undergone uniaxial orientation in the MD direction (an MDO film) or may be a film that has undergone biaxial orientation in the MD direction and the TD direction (a BO film).

The thickness of the multilayer film is preferably 10 µm or more, more preferably 15 µm or more, even more preferably 18 µm or more, particularly preferably 20 µm or more, and preferably is 200 µm or less, more preferably 100 µm or less, even more preferably 50 µm or less, particularly preferably 40 µm or less. A multilayer film whose thickness is equal to or greater than the lower limits is superior in, for example, strength and heat resistance. A multilayer film whose thickness is equal to or smaller than the upper limits is superior in, for example, workability.

The thickness of the barrier resin layer is preferably 1% or more, more preferably 3% or more, even more preferably 5% or more, and preferably is 30% or less, more preferably 25% or less, even more preferably 20% or less, in relation to the thickness of the multilayer film. When the multilayer film includes two or more barrier resin layers, this thickness refers to the sum of the thickness of each barrier resin layer.

The multilayer film can be produced by, for example, preparing a film by shaping the materials constituting the individual layers into a film and then stretching this film. Examples of methods for film formation include inflation molding and T-die molding. With inflation molding, stretching can be performed continuously after film formation.

The multilayer film is, in an embodiment, a coextruded resin film.

The multilayer film is, in an embodiment, a film obtained by coextruding the materials constituting the polyolefin layer and the materials constituting the barrier resin layer to form a film, for example by inflation molding or T-die molding, and then subjecting the resulting film to stretching treatment. Resin films containing gas barrier resins such as ethylene-vinyl alcohol copolymers, polyvinyl alcohol, and polyamides can be difficult to process into thin layers directly. When a solution containing a gas barrier resin is applied to a polyolefin layer to form a coating layer, furthermore, the compatibility between the solution and the polyolefin layer is not high. The polyolefin layer, therefore, repels the solution, which can make coating difficult. In contrast to these methods, coextruding the polyolefin and the barrier resin by the coextrusion technique and subjecting the resulting film to stretching treatment enables the production of a multilayer film that includes a thin barrier resin layer on a polyolefin layer.

This stretched film is superior in workability in a deposition step because it has some thickness and also has the film's intrinsic strength. This stretched film, therefore, allows a thin-film layer to be easily formed on its barrier resin layer. By contrast, forming a thin-film layer on a film consisting solely of a thin barrier resin layer having a thickness of 3 µm or less as mentioned above can be difficult.

The multilayer film may have undergone surface treatment. Such a multilayer film is superior in, for example, adhesion to other layers. Examples of methods for surface treatment are as described above.

### <Layer Configuration of the Transfer Film>

For the layer configuration of the transfer film according to the present disclosure, several examples are presented below.
- First PO layer/barrier resin layer/thin-film layer
- Second PO layer/first PO layer/barrier resin layer/thin-film layer
- Second PO layer/second PO layer/second PO layer/first PO layer/barrier resin layer/thin-film layer
- First PO layer/barrier resin layer/thin-film layer/protective layer
- Second PO layer/first PO layer/barrier resin layer/thin-film layer/protective layer
- Second PO layer/second PO layer/second PO layer/first PO layer/barrier resin layer/thin-film layer/protective layer
- First PO layer/barrier resin layer/thin-film layer/bonding layer
- Second PO layer/first PO layer/barrier resin layer/thin-film layer/bonding layer
- Second PO layer/second PO layer/second PO layer/first PO layer/barrier resin layer/thin-film layer/bonding layer
- First PO layer/barrier resin layer/thin-film layer/protective layer/bonding layer
- Second PO layer/first PO layer/barrier resin layer/thin-film layer/protective layer/bonding layer
- Second PO layer/second PO layer/second PO layer/first PO layer/barrier resin layer/thin-film layer/protective layer/bonding layer

"PO layer" refers to a polyolefin layer, and "/" denotes an interface between layers.

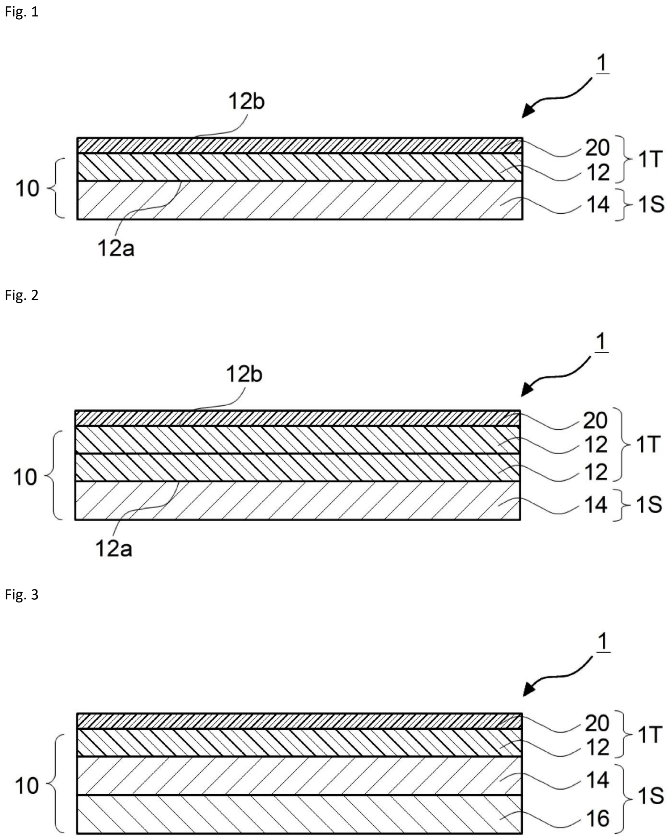

In Fig. 1 to Fig. 4, schematic cross-sectional views according to an embodiment of the transfer film according to the present disclosure are presented.

The transfer film 1 illustrated in Fig. 1 includes a first polyolefin layer 14, a barrier resin layer 12, and a thin-film layer 20 in this order. The barrier resin layer 12 has a first surface 12a and a second surface 12b. The first polyolefin layer 14 is provided in contact with the first surface 12a of the barrier resin layer 12. The thin-film layer 20 is provided in contact with the second surface 12b of the barrier resin layer 12.

The transfer film 1 illustrated in Fig. 2 includes a first polyolefin layer 14, a barrier resin layer 12, a barrier resin layer 12, and a thin-film layer 20 in this order. The transfer film 1 illustrated in Fig. 2 includes two barrier resin layers 12.

The transfer film 1 illustrated in Fig. 3 includes a second polyolefin layer 16, a first polyolefin layer 14, a barrier resin layer 12, and a thin-film layer 20 in this order.

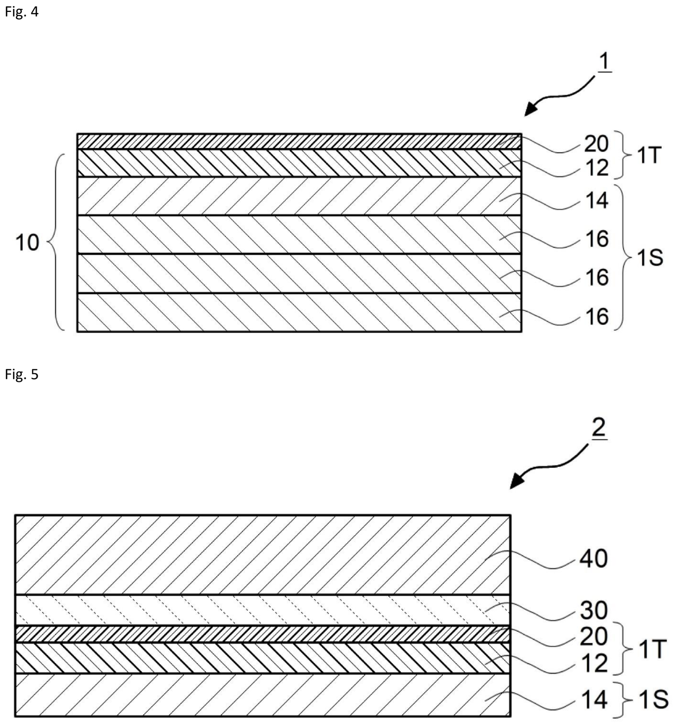

The transfer film 1 illustrated in Fig. 4 includes a second polyolefin layer 16, a second polyolefin layer 16, a second polyolefin layer 16, a first polyolefin layer 14, a barrier resin layer 12, and a thin-film layer 20 in this order. The transfer film 1 illustrated in Fig. 4 includes three second polyolefin layers 16.

The transfer films 1 illustrated in Fig. 1 to Fig. 4 include a support layer 1S and a transfer layer 1T provided on the support layer 1S. The transfer films 1 illustrated in Fig. 1 to Fig. 4 include a multilayer film 10. The multilayer film 10 includes a first polyolefin layer 14 and barrier resin layer(s) 12 optionally with second polyolefin layer(s) 16.

The transfer films 1 illustrated in Fig. 1 to Fig. 4 may further include a protective layer and/or a bonding layer, both not illustrated, on the surface of the thin-film layer 20 opposite the surface facing the barrier resin layer(s) 12.

### <Gas Barrier Properties of the Transfer Film>

The oxygen transmission rate (unit: cc/(m²·day·atm)) of the transfer film according to the present disclosure is preferably 3.0 or less, more preferably 1.5 or less, even more preferably 1.0 or less, still more preferably 0.5 or less, particularly preferably 0.3 or less. The lower limit to the oxygen transmission rate may be, for example, 0.01. The oxygen transmission rate is measured in an environment at a temperature of 23°C and a humidity of 65% RH according to JIS K7126-2: 2006.

The water vapor transmission rate (unit: g/(m²·day)) of the transfer film according to the present disclosure is preferably 10 or less, more preferably 7.0 or less, even more preferably 5.0 or less, still more preferably 3.0 or less, particularly preferably 2.0 or less. The lower limit to the water vapor transmission rate may be, for example, 0.1. The water vapor transmission rate is measured in an environment at a temperature of 38°C and a humidity of 90% RH according to JIS K7129-2: 2019.

### [Barrier Laminate]

A barrier laminate according to a first aspect of the present disclosure includes at least:
a first polyolefin layer;
a barrier resin layer;
a thin-film layer containing a metal and/or an inorganic oxide;
a bonding layer; and
a substrate
in this order.

A barrier laminate according to a second aspect of the present disclosure includes at least:
a barrier resin layer;
a thin-film layer containing a metal and/or an inorganic oxide;
a bonding layer; and
a substrate
in this order.

The barrier laminate according to the first aspect of the present disclosure may further include a second polyolefin layer on the surface of the first polyolefin layer opposite the surface facing the barrier resin layer. The barrier laminate according to the first aspect of the present disclosure may include one or two or more second polyolefin layers. The barrier laminate according to the first aspect of the present disclosure may include at least a transfer film as described above, the bonding layer if desired, and the substrate in this order. The barrier laminate according to the second aspect of the present disclosure may include at least a transfer layer as described above, the bonding layer if desired, and the substrate in this order. When the transfer film or transfer layer includes a bonding layer, the bonding layer does not need to be provided.

The barrier laminates according to the first aspect and the second aspect of the present disclosure may further include a protective layer between the thin-film layer and the bonding layer.

The barrier laminate according to the second aspect of the present disclosure may further include a heat-fusible resin layer.

By peeling away at least the first polyolefin layer of the barrier laminate according to the first aspect of the present disclosure, the barrier laminate according to the second aspect can be obtained. Specifically, by peeling away the support layer constituting the transfer film in the barrier laminate according to the first aspect of the present disclosure, the barrier laminate according to the second aspect can be obtained. As can be seen from this, the barrier laminate according to the first aspect may be an intermediate laminate for obtaining the barrier laminate according to the second aspect.

The details of each layer and the thin-film layer and the positional relationship between the individual layers in the barrier laminates according to the first aspect and the second aspect are as described above in the Transfer Film section, and their description in this section is omitted.

### <Base Material (Transfer Substrate)>

Examples of substrate s include a resin film, a paper substrate, and a wood material.

The substrate may be a substrate on which direct formation of a thin-film layer is difficult, such as a resin film with a large thickness, a paper substrate, or a wood material. Of these, a paper substrate is particularly preferred. A barrier laminate according to the second aspect that includes a paper substrate as the substrate is also referred to as a "paper barrier laminate."

From the viewpoint of reducing environmental impacts, a paper substrate can occasionally be used as the substrate instead of a resin film. Because paper substrates usually have low gas barrier properties, there can be a need to impart gas barrier properties to them. Forming a thin-film layer on a paper substrate by subjecting it directly to deposition treatment, however, involves the problems of difficulty in deposition treatment and costs. By using the transfer film according to the present disclosure, a thin-film layer can be provided on a paper substrate via the transfer method, without subjecting the paper substrate directly to deposition treatment. A paper barrier laminate obtained in such a manner is superior in gas barrier properties.

The substrate is the transfer substrate onto which the transfer layer of the transfer film is transferred.

The substrate may be a cut sheet or may be a roll-shaped, wound continuous sheet.

Examples of resins that can constitute a resin film include polyolefins, vinyl resins, styrene resins, (meth)acrylic resins, polyesters, polycarbonates, polyamides, polyimides, polyurethanes, diaryl phthalate resins, silicone resins, polysulfone resins, polyphenylene sulfide resins, polyethersulfone resins, cellulose resins, and fluoropolymers. Examples of polyolefins include polyethylene, polypropylene, polybutene, and cyclic polyolefins. Examples of vinyl resins include ethylene-vinyl acetate copolymers, ethylene-vinyl alcohol copolymers, and polyvinyl alcohol. Examples of styrene resins include styrene homopolymers, acrylonitrile-styrene copolymers, and acrylonitrile-butadienestyrene copolymers. Examples of polyesters include polyethylene terephthalate and polybutylene terephthalate.

Specific examples of resin films include a polyolefin substrate, a vinyl resin substrate, a polyester substrate, a polyamide substrate, a polyimide substrate, and a fluoropolymer substrate.

Examples of paper substrates include paper materials such as kraft paper, pure-white machine-glazed paper, woodfree paper, ordinary grade paper, glassine paper, Kent paper, converting paper, paperboard, synthetic paper, and cardboard (e.g., food-grade paperboard and carton paper). A paper substrate may be a paper substrate composed of a paper material and a filling layer or resin layer formed on one side or both sides of it, such as clay-coated paper, ultra-lightweight coated paper, coated printing paper (e.g., coated paper, cast-coated paper, or art paper), resin-coated paper, release paper, or double-coated release paper.

A paper substrate may contain additives. Examples of additives include sizing agents, lubricants, antioxidants, ultraviolet absorbers, photostabilizers, antistatic agents, fluorescent brightening agents, fluorescent brightening reducers, filling agents, reinforcing agents, pigments, and dyes. The additives can be added in any amounts according to their purposes, as long as they do not adversely affect other performance attributes.

It is also possible to pretreat the surface of the substrate facing the bonding layer using physical surface treatments, such as corona discharge treatment, ozonation, plasma treatment, glow discharge treatment, and sandblasting; and chemical surface treatments, such as oxidation treatment using chemicals.

A paper substrate includes, in an embodiment, a paper material as described above and a filling layer or resin layer formed on the surface of the paper material facing the bonding layer. A filling layer has the function of stabilizing the bonding force of the bonding layer by reducing the penetration of the adhesive, for example, constituting the bonding layer into the paper material.

The filling layer or resin layer contains, in an embodiment, a resin component. Examples of resin components include thermoplastic resins and cured forms of thermosetting resins. Examples of thermoplastic resins include polyolefins, such as polyethylene and polypropylene, vinyl resins, such as vinyl chloride resins and vinyl acetate resins, styrene resins, such as styrene-butadiene copolymers, (meth)acrylic resins, polyesters, polyamides, polyurethanes, and cellulose resins.

The filling layer or resin layer contains, in an embodiment, additives. Examples of additives include lubricants, antioxidants, ultraviolet absorbers, photostabilizers, antistatic agents, fluorescent brightening agents, fluorescent brightening reducers, filling agents, reinforcing agents, pigments, and dyes. The filling layer or resin layer preferably contains a filling agent. Examples of filling agents include clay, silica, calcium carbonate, titanium oxide, and zinc oxide.

The filling layer or resin layer can be formed by, for example, application or extrusion coating. The thickness of the filling layer or resin layer is, for example, 0.1 µm or more and 30 µm or less.

A paper substrate or other substrate may consist of a single layer or may be composed of multiple layers including two or more layers of identical or different substrate s. The substrate s can be stacked using any stacking means with an adhesive agent layer known in the related art interposed therebetween.

The thickness of a paper substrate or other substrate is preferably 10 µm or more, more preferably 30 µm or more, even more preferably 40 µm or more, and preferably is 1,500 µm or less, more preferably 500 µm or less, even more preferably 300 µm or less. The grammage of a paper substrate is preferably 20 g/m² or more, more preferably 30 g/m² or more, and preferably is 600 g/m² or less, more preferably 450 g/m² or less. When the substrate is composed of multiple layers, the thickness of the substrate refers to the total thickness of the multiple layers of substrate s. The same applies to the grammage. A paper substrate may be any of thin paper or cardboard. With such a thickness and/or grammage, appropriate strength and rigidity, for example, can be imparted to the barrier laminate. When the thickness and/or grammage is equal to or greater than the lower limits, the occurrence of curling and waviness, for example, can be reduced during the manufacturing of the barrier laminate. When the thickness and/or the grammage is equal to or smaller than the upper limits, the strength and rigidity fall within appropriate ranges. As a result, a decrease in operation efficiency can be limited.

The substrate may be subjected to decorating treatment, such as hot stamping treatment, embossing, or shaping treatment, on the surface opposite the surface facing the bonding layer.

### <Design Layer>

The barrier laminates according to the present disclosure may further include a design layer, such as a printed layer.

The design layer retains an image. Examples of images include text, figures, patterns, symbols, and their combinations. The image may include text information, such as the product name, the name of the article in the packaging container, the manufacturer, and the raw material names. The image may be unicolored and plain (a so-called solid image).

The design layer may be provided on, for example, the surface of the substrate. When the substrate is a paper substrate or wood material, the design layer may be provided on, for example, the surface of the paper substrate or wood material opposite the surface facing the bonding layer.

The design layer contains, in an embodiment, a coloring agent. Examples of coloring agents include pigments, such as inorganic pigments and organic pigments, and dyes, such as acid dyes, direct dyes, disperse dyes, oil-soluble dyes, metal-containing oil-soluble dyes, and sublimation dyes. In addition, fluorescent materials, such as ultraviolet light-emitting materials, which produce fluorescence by absorbing ultraviolet radiation, and infrared light-emitting materials, which produce fluorescence by absorbing infrared radiation, are also examples of coloring agents.

The thickness of the design layer is preferably 0.1 µm or more, more preferably 0.2 µm or more, even more preferably 0.3 µm or more. The thickness of the design layer is preferably 10 µm or less, more preferably 5 µm or less, even more preferably 3 µm or less.

### <Bonding Layer>

The barrier laminates according to the present disclosure include a bonding layer between the substrate and the thin-film layer. Such a barrier laminate is superior in, for example, adhesion between the substrate and the thin-film layer.

The bonding layer may be, in an embodiment, an adhesive agent layer, which is composed of an adhesive. The adhesive may be any of a one-component adhesive, a two-component adhesive, or a non-curing adhesive. The adhesive may be a solventless adhesive or may be a solvent-based adhesive.

Examples of solventless adhesives, or solventless lamination adhesives, include polyether adhesives, polyester adhesives, silicone adhesives, epoxy adhesives, and urethane adhesives. Of these, urethane adhesives are particularly preferred, with two-component urethane adhesives being more preferred.

Examples of solvent-based adhesives include rubber adhesives, vinyl adhesives, olefin adhesives, silicone adhesives, epoxy adhesives, phenolic adhesives, and urethane adhesives. Of these, urethane adhesives are particularly preferred, with two-component urethane adhesives being more preferred.

The thickness of the adhesive agent layer is preferably 0.1 µm or more, more preferably 0.2 µm or more, even more preferably 0.5 µm or more. The thickness of the adhesive agent layer is preferably 10 µm or less, more preferably 8 µm or less, even more preferably 6 µm or less. The thickness of the adhesive agent layer may be 2 µm or less.

The bonding layer may be, in an embodiment, an adhesive resin layer containing a thermoplastic resin or may be an extruded resin layer containing a thermoplastic resin. Examples of thermoplastic resins include high-density polyethylene, medium-density polyethylene, low-density polyethylene, linear low-density polyethylene, ethylene-vinyl acetate copolymers, ethylene-(meth)acrylic acid copolymers, ethylene-methyl (meth)acrylate copolymers, ethylene-ethyl (meth)acrylate copolymers, ethylene-maleic acid copolymers, ionomer resins, and resins obtained by grafting or copolymerizing a polyolefin with an unsaturated carboxylic acid, an unsaturated carboxylic anhydride, or an ester monomer. The thermoplastic resin may be a fossil fuel-derived material or may be a biomass-derived material, or both of them may be used.

The extruded resin layer is preferably an extruded polyethylene layer.

Examples of types of polyethylene that can be contained in the extruded polyethylene layer include high-density polyethylene, medium-density polyethylene, low-density polyethylene, and linear low-density polyethylene. Of these, low-density polyethylene and linear low-density polyethylene are particularly preferred from the viewpoint of interlayer adhesion, and low-density polyethylene is more preferred.

The thickness of an extruded resin layer or other adhesive resin layer is preferably 5 µm or more, more preferably 10 µm or more, for interlayer adhesion reasons, and preferably is 30 µm or less, more preferably 25 µm or less, for reduced production cost of the laminate and improved productivity in its manufacture.

### <Heat-Fusible Resin Layer>

The barrier laminate according to the second aspect of the present disclosure may include a heat-fusible resin layer as a surface layer of the laminate on the first surface of the barrier resin layer. The heat-fusible resin layer functions as a heat-sealable sealant layer when, for example, the barrier laminate is used as a packaging material. A heat-fusible resin layer is a layer having heat sealability. Specifically, it is a layer that can be bonded to a bonding target through heating and pressure bonding or a layer that can be fused and bonded to another layer of the same kind through heating and pressure bonding.

Such a heat-fusible resin layer functions as, for example, a sealing layer of a packaging container that includes the barrier laminate. When a packaging container is produced using a barrier laminate according to the present disclosure, the heat-fusible resin layer is the layer that faces the storage space in the packaging container.

The heat-fusible resin layer contains, for example, a heat-fusible resin as its primary component. Examples of heat-fusible resins include polyolefins and (meth)acrylic resins. Of these, polyolefins are particularly preferred. Examples of polyolefins include polyethylene and polypropylene. Of these, polyethylene is particularly preferred from the viewpoint of heat sealability.

Examples of types of polyethylene include high-density polyethylene, medium-density polyethylene, low-density polyethylene, linear low-density polyethylene, ethylene-vinyl acetate copolymers, and ethylene-(meth)acrylic acid copolymers. Low-density polyethylene and linear low-density polyethylene are preferred from the viewpoint of heat sealability. Biomass polyethylene and/or recycled polyethylene may be used from the viewpoint of reducing environmental impacts.

Examples of numerical ranges for the MFR of polyethylene contained in the heat-fusible resin layer are the same numerical ranges as for the MFR of the polyolefin contained in the first polyolefin layer.

The melting point (Tm) of polyethylene in the heat-fusible resin layer is preferably 140°C or below, more preferably 130°C or below, even more preferably 125°C or below, and preferably is 90°C or above, more preferably 95°C or above, even more preferably 100°C or above, for heat sealability reasons.

The percentage of polyethylene or another heat-fusible resin in the heat-fusible resin layer is preferably more than 50% by mass, more preferably 60% by mass or more, even more preferably 70% by mass or more, still more preferably 80% by mass or more, particularly preferably 90% by mass or more.

The heat-fusible resin layer may contain additives as mentioned above.

The heat-fusible resin layer may have a single-layer structure or may have a multilayer structure.

The thickness of the heat-fusible resin layer is preferably 1 µm or more, more preferably 5 µm or more, even more preferably 10 µm or more, still more preferably 20 µm or more, particularly preferably 30 µm or more. The thickness of the heat-fusible resin layer is preferably 200 µm or less, more preferably 150 µm or less, even more preferably 100 µm or less, still more preferably 80 µm or less, particularly preferably 60 µm or less. The thickness of the heat-fusible resin layer is preferably changed as appropriate according to the strength of the heat-fusible resin layer and the workability of the barrier laminate, as well as the mass of the contents to be packed in the packaging container manufactured using the barrier laminate.

The heat-fusible resin layer may be formed by, for example, applying a coating liquid containing a heat-fusible resin to the first surface of the barrier resin layer and drying the applied liquid. The heat-fusible resin layer may be formed by, for example, melt-extruding a heat-fusible resin onto the first surface of the barrier resin layer. The heat-fusible resin layer may be, for example, a heat-fusible resin film attached to the first surface of the barrier resin layer, optionally with a bonding layer interposed therebetween. The details of the bonding layer are as described above.

The heat-fusible resin film is preferably a cast resin film for heat sealability reasons. This resin film can be produced by utilizing, for example, casting, the T-die method, or inflation. Cast film is a concept that does not only represent a completely unstretched film but also encompasses a film that is slightly stretched due to the tension applied during film formation.

### <Layer Configuration of the Barrier Laminates>

For the layer configuration of the barrier laminate according to the first aspect of the present disclosure, several examples are presented below.
- First PO layer/barrier resin layer/thin-film layer/bonding layer/substrate
- Second PO layer/first PO layer/barrier resin layer/thin-film layer/bonding layer/substrate
- Second PO layer/second PO layer/second PO layer/first PO layer/barrier resin layer/thin-film layer/bonding layer/substrate
- First PO layer/barrier resin layer/thin-film layer/protective layer/bonding layer/substrate
- Second PO layer/first PO layer/barrier resin layer/thin-film layer/protective layer/bonding layer/substrate
- Second PO layer/second PO layer/second PO layer/first PO layer/barrier resin layer/thin-film layer/protective layer/bonding layer/substrate

For the layer configuration of the barrier laminate according to the second aspect of the present disclosure, several examples are presented below.
- Barrier resin layer/thin-film layer/bonding layer/substrate
- Barrier resin layer/thin-film layer/protective layer/bonding layer/substrate
- Heat-fusible resin layer/barrier resin layer/thin-film layer/bonding layer/substrate
- Heat-fusible resin layer/barrier resin layer/thin-film layer/protective layer/bonding layer/substrate

In Fig. 5 to Fig. 7, schematic cross-sectional views according to an embodiment of the barrier laminates according to the present disclosure are presented.

The barrier laminate 2 according to the first aspect illustrated in Fig. 5 includes a first polyolefin layer 14, a barrier resin layer 12, a thin-film layer 20, a bonding layer 30, and a substrate (transfer substrate) 40 in this order.

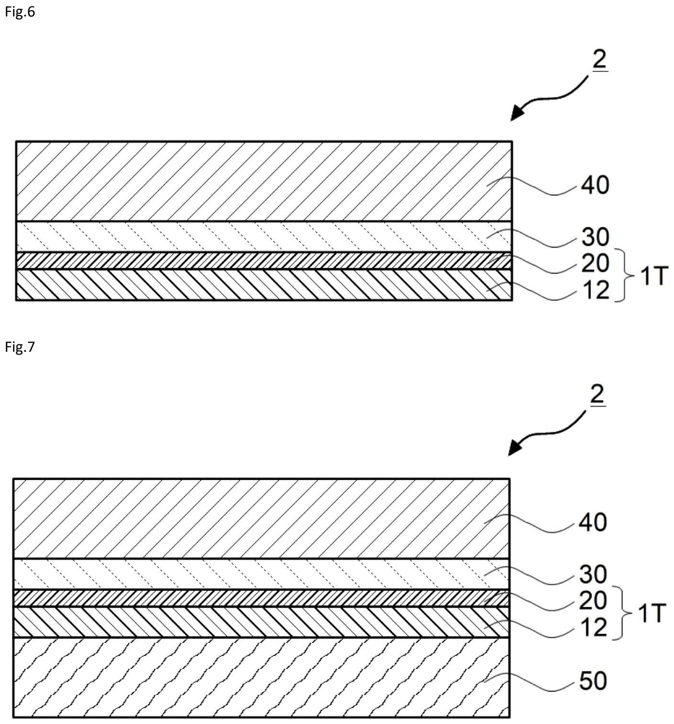

The barrier laminate 2 according to the second aspect illustrated in Fig. 6 includes a barrier resin layer 12, a thin-film layer 20, a bonding layer 30, and a substrate (transfer substrate) 40 in this order. The barrier laminate 2 according to the second aspect illustrated in Fig. 7 includes a heat-fusible resin layer 50, a barrier resin layer 12, a thin-film layer 20, a bonding layer 30, and a substrate (transfer substrate) 40 in this order.

The oxygen transmission rate (unit: cc/(m²·day·atm)) of a paper barrier laminate according to the present disclosure is preferably 1.0 or less, more preferably 0.8 or less, even more preferably 0.6 or less, still more preferably 0.4 or less, particularly preferably 0.2 or less. The lower limit to the oxygen transmission rate may be, for example, 0.01. The oxygen transmission rate is measured in an environment at a temperature of 23°C and a humidity of 65% RH according to JIS K7126-2: 2006.

The water vapor transmission rate (unit: g/(m²·day)) of a paper barrier laminate according to the present disclosure is preferably 2.0 or less, more preferably 1.5 or less, even more preferably 1.0 or less, still more preferably 0.8 or less, especially preferably 0.6 or less, particularly preferably 0.5 or less. The lower limit to the water vapor transmission rate may be, for example, 0.01 or 0.1. The water vapor transmission rate is measured in an environment at a temperature of 38°C and a humidity of 90% RH according to JIS K7129-2: 2019.

### <Method for Manufacturing Barrier Laminates>

The barrier laminates according to the present disclosure can be obtained using, for example, the following manufacturing method.

A method according to the present disclosure for manufacturing barrier laminates includes:
a step of preparing a transfer film according to the present disclosure and a substrate (hereinafter also referred to as "the preparation step");
a step of placing the transfer film on the substrate with a bonding layer interposed therebetween such that the thin-film layer of the transfer film faces the substrate, thereby obtaining a barrier laminate according to the first aspect that includes the transfer film, the bonding layer, and the substrate in this order (hereinafter also referred to as "the attachment step"); and
a step of peeling away the support layer of the transfer film in the barrier laminate according to the first aspect from the transfer layer, thereby obtaining a barrier laminate according to the second aspect that includes the transfer layer, the bonding layer, and the substrate in this order (hereinafter also referred to as "the peeling step").

The method according to the present disclosure for manufacturing barrier laminates may further include a step of forming a heat-fusible resin layer on the second surface of the barrier resin layer (hereinafter also referred to as "the resin layer formation step").

Through the attachment step and the peeling step described above, the transfer layer can be transferred onto the substrate, such as a paper substrate. A thin-film layer transferred onto a paper substrate by the transfer technique is less contaminated, exhibits higher adhesion between the thin-film layer and the bonding layer, is more homogeneous and stable, and is better in terms of gas barrier properties than a thin-film layer formed directly on a paper substrate by deposition. With the manufacturing method according to the present disclosure, a thin-film layer can be provided on a substrate in the same manner as when using a resin film, despite the use of a paper substrate. In such a manner, paper barrier laminates that have excellent gas barrier properties and are environmentally friendly can be obtained.

### (Preparation Step)

In the preparation step, a transfer film according to the present disclosure and a substrate are prepared.

### (Attachment Step)

In the attachment step, the transfer film is placed on the substrate with a bonding layer interposed therebetween such that the thin-film layer of the transfer film faces the base material to give a barrier laminate according to the first aspect that includes the transfer film, the bonding layer, and the substrate in this order (hereinafter also referred to as "the intermediate laminate"). In the attachment step, the transfer film and the substrate serving as the transfer substrate are joined together with a bonding layer interposed therebetween. It should be noted that when the transfer film (transfer layer) includes a bonding layer, a separate bonding layer does not need to be provided. In that case, the transfer film may be placed on the substrate such that the bonding layer of the transfer film faces the substrate to give a barrier laminate according to the first aspect that includes the transfer film and the substrate in this order.

In the attachment step, the bonding layer may be formed either on the transfer film or on the substrate or may be formed on both, or the formation of the bonding layer and the bonding between the transfer substrate and the transfer film may be performed simultaneously by supplying an adhesive or a thermoplastic resin between the transfer film and the substrate.

In the attachment step, in an embodiment, a bonding layer is formed on the substrate, and the transfer film is attached to this bonding layer. In the attachment step, in an embodiment, a bonding layer is formed on the transfer layer of the transfer film, and the substrate is attached to this bonding layer. In the attachment step, in an embodiment, a bonding layer is formed on the substrate, a bonding layer is formed on the transfer layer of the transfer film, and the substrate and the transfer film are joined together such that the bonding layers of both come into contact. Specific examples of methods for forming the bonding layer(s) include dry lamination, in which a solvent-based adhesive is used, solventless lamination, in which a solventless adhesive is used, and the method of forming extruded layer(s) through the extrusion of a thermoplastic resin. An adhesive agent layer can be formed by applying an adhesive, for example to the transfer film or substrate, using a method such as direct gravure roll coating, gravure roll coating, kiss coating, reverse roll coating, fountain coating, or transfer roll coating and drying the applied adhesive.

### (Peeling Step)

In the peeling step, the support layer of the transfer film in the barrier laminate according to the first aspect is peeled away from the transfer layer to give a barrier laminate according to the second aspect that includes the transfer layer, the bonding layer, and the substrate in this order. For example, after the development of sufficient adhesive strength by the bonding layer between the substrate and the transfer film, the support layer of the barrier laminate according to the first aspect is peeled away from the transfer layer. In an embodiment, the support layer of the transfer film may be peeled away from the transfer layer while the substrate and the transfer film are being joined together with a bonding layer interposed therebetween. When the transfer film (transfer layer) includes a bonding layer as stated above, the support layer of the transfer film in the barrier laminate according to the first aspect may be peeled away from the transfer layer to give a barrier laminate according to the second aspect that includes the transfer layer and the substrate in this order.

For example, when the barrier laminate according to the first aspect is a roll-shaped, wound continuous sheet, release rollers may be used to continuously peel away the support layer (film to be peeled away) from the transfer layer of the barrier laminate according to the first aspect and wind up each of the barrier laminate according to the second aspect and the support layer (peeled film).

### (Resin Layer Formation Step)

In the resin layer formation step, a heat-fusible resin layer is formed on the first surface of the barrier resin layer. The heat-fusible resin layer may be formed by, for example, applying a coating liquid containing a heat-fusible resin to the first surface of the barrier resin layer and drying the applied liquid or may be formed through melt extrusion of a heat-fusible resin, or a heat-fusible resin film may be attached, optionally with a bonding layer as described above interposed therebetween.

### [Packaging Bag or Other Packaging Containers]

The barrier laminates according to the present disclosure are suitable for use in packaging container applications, such as packaging bags.

Examples of packaging containers include packaging bags, cups, trays, and lidded containers.

A packaging bag or other packaging container according to the present disclosure includes a barrier laminate according to the second aspect of the present disclosure. The packaging bag or other packaging container according to the present disclosure may optionally further include layers having various functions along with the barrier laminate. The packaging container may be a packaging container that includes a paper barrier laminate as defined above.

For example, a packaging bag can be produced by folding the barrier laminate in two such that the substrate, such as a paper substrate, is positioned outside and a heat-fusible resin layer is positioned inside, aligning the two halves, and heat-sealing, for example, their edges. Alternatively, a packaging bag can be produced by aligning multiple barrier laminates such that their heat-fusible resin layers face each other and heat-sealing, for example, their edges. All of the packaging bag may be composed of the barrier laminate(s), or part of the packaging bag may be composed of the barrier laminate(s).

Examples of forms of heat sealing for packaging bags include side seal, two-side seal, three-side seal, four-side seal, center seal, pillow seal, pleated seal, flat-bottom seal, square-bottom seal, and gusset seal. In addition, a self-standing bag for packaging (stand-up pouch) can also be used. Examples of methods for heat sealing include bar sealing, revolving roller sealing, belt sealing, impulse sealing, radiofrequency sealing, and ultrasonic sealing.

Examples of contents that can be held in the packaging bag include liquids, powders, and gels. The contents may be food or may be an inedible article. Packing the contents into the packaging bag and then heat-sealing the opening of the packaging bag yields a packaged product.

Specific examples of contents include coffee beans and tea leaves; foods, such as cheese, snack foods, rice crackers, perishable or semi-perishable confectionery, nuts, vegetables, fruits, processed fish or meat, fish paste products, dried fish, smoked foods, *tsukudani* (Japanese seafood simmered in sweetened soy sauce), uncooked rice, cooked rice and rice dishes, rice cakes, baby food, jam, mayonnaise, ketchup, cooking oils, dressings, sauces, spices, dairy products, and pet food; beverages, such as beer, wine, fruit juice, green tea, and coffee; pharmaceuticals; cosmetics, shampoo, hair rinse, and detergent; and metal components and electronic components.

The present disclosure relates to, for example, [1] to [24] below.
[1] A transfer film including a support layer and a transfer layer peelable from the support layer, wherein the support layer includes at least a first polyolefin layer containing a polyolefin as a primary component, the transfer layer includes at least a barrier resin layer containing at least one gas barrier resin as a primary component and a thin-film layer containing a metal and/or an inorganic oxide, and the first polyolefin layer and the barrier resin layer are in contact with each other.
[2] The transfer film according to [1] above, wherein the barrier resin layer contains, as the gas barrier resin, at least one selected from an ethylene-vinyl alcohol copolymer, polyvinyl alcohol, and a polyamide.
[3] The transfer film according to [2] above, wherein the ethylene-vinyl alcohol copolymer has an ethylene content of 50 mol% or less.
[4] The transfer film according to any one of [1] to [3] above, wherein the barrier resin layer has a thickness of 0.3 µm or more and 10 µm or less.
[5] The transfer film according to any one of [1] to [4] above, wherein the first polyolefin layer is a layer containing polyethylene having a density of 0.930 g/cm³ or more as a primary component, a layer containing polyethylene having a density of less than 0.930 g/cm³ as a primary component, or a layer containing polypropylene as a primary component.
[6] The transfer film according to any one of [1] to [5] above, wherein the support layer further includes one or two or more second polyolefin layers, and the one or two or more second polyolefin layers are located on a surface of the first polyolefin layer opposite a surface facing the barrier resin layer.
[7] The transfer film according to any one of [1] to [6] above, wherein the barrier resin layer has a first surface and a second surface opposite the first surface, the first polyolefin layer is in contact with the first surface of the barrier resin layer, and the thin-film layer is in contact with the second surface of the barrier resin layer.
[8] The transfer film according to any one of [1] to [7] above, wherein peel strength between the first polyolefin layer and the barrier resin layer as measured under the following conditions is 0.5 N/15 mm width or less: peel angle, T-peel; test speed, 50 mm/min.
[9] The transfer film according to any one of [1] to [8] above, wherein the thin-film layer is an aluminum thin-film layer, and the aluminum thin-film layer has an optical density (OD value) of 1.0 or greater.
[10] The transfer film according to any one of [1] to [8] above, wherein the thin-film layer is an aluminum oxide thin-film layer or a silicon oxide thin-film layer.
[11] The transfer film according to any one of [1] to [10] above, wherein the transfer layer further includes a protective layer on a surface of the thin-film layer opposite a surface facing the barrier resin layer.
[12] The transfer film according to any one of [1] to [11] above, wherein the transfer film includes at least a multilayer film including at least the first polyolefin layer and the barrier resin layer and the thin-film layer located on the barrier resin layer, and the multilayer film has a thickness of 10 µm or more and 100 µm or less.
[13] The transfer film according to [12] above, wherein the multilayer film is a coextruded resin film.
[14] The transfer film according to [12] or [13] above, wherein the multilayer film is a film uniaxially oriented in an MD direction or a biaxially oriented film.
[15] A barrier laminate including at least the transfer film according to any one of [1] to [14] above, a bonding layer, and a substrate in this order, wherein the barrier laminate includes at least the first polyolefin layer, the barrier resin layer, the thin-film layer, the bonding layer, and the substrate in this order.
[16] A barrier laminate including at least a barrier resin layer containing at least one gas barrier resin as a primary component, a thin-film layer containing a metal and/or an inorganic oxide, a bonding layer, and a base material in this order.
[17] The barrier laminate according to [15] or [16] above, wherein the barrier resin layer has a first surface and a second surface opposite the first surface, and the thin-film layer is in contact with the second surface of the barrier resin layer.
[18] The barrier laminate according to [16] or [17] above, wherein the barrier resin layer has a first surface and a second surface opposite the first surface, and the barrier laminate further includes a heat-fusible resin layer on the first surface of the barrier resin layer.
[19] The barrier laminate according to any one of [15] to [18] above, wherein the substrate is a paper substrate, a wood material, a polyimide substrate, a fluoropolymer substrate, or a polyolefin substrate.
[20] The barrier laminate according to any one of [16] to [18] above, wherein the substrate is a paper substrate.
[21] The barrier laminate according to any one of [15] to [20] above, wherein the bonding layer is an adhesive agent layer or an adhesive resin layer.
[22] A method for manufacturing a barrier laminate, the method including a step of preparing the transfer film according to any one of [1] to [14] above and a substrate, a step of placing the transfer film on the substrate with a bonding layer interposed therebetween such that the thin-film layer of the transfer film faces the substrate, thereby obtaining an intermediate laminate including the transfer film, the bonding layer, and the substrate in this order, and a step of peeling away the support layer of the transfer film in the intermediate laminate from the transfer layer, thereby obtaining a barrier laminate including the transfer layer, the bonding layer, and the substrate in this order.
[23] A packaging container including the barrier laminate according to any one of [16] to [21] above.
[24] A packaging container including the barrier laminate according to [20] above.

### EXAMPLES

The transfer film and the laminates according to the present disclosure will be more specifically described based on examples; however, the transfer film and the laminates according to the present disclosure are not limited by the examples in any way.

### [Production of Transfer Films and Laminates]

The ingredients used in the Examples below are listed.
- Ethylene-vinyl alcohol copolymer (EVOH)
   EVAL F171B, manufactured by Kuraray Co., Ltd.;
   density, 1.19 g/cm³; melting point, 183°C;
   MFR, 1.6 g/10 minutes; ethylene content, 32 mol%
- Ethylene-vinyl alcohol copolymer (EVOH)
   EVAL L171B, manufactured by Kuraray Co., Ltd.;
   density, 1.21 g/cm³; melting point, 190°C;
   MFR, 4.0 g/10 minutes; ethylene content, 27 mol%
- Ethylene-vinyl alcohol copolymer (EVOH)
   EVAL G156B, manufactured by Kuraray Co., Ltd.;
   density, 1.12 g/cm³; melting point, 157°C;
   MFR, 6.4 g/10 minutes; ethylene content, 48 mol%
- Polyvinyl alcohol (PVA)
   Nichigo G-Polymer BVE8049P,
   manufactured by Mitsubishi Chemical Corporation;
   density, 1.29 g/cm³; melting point, 188°C;
   MFR, 4.3 g/10 minutes; a thermoplastic resin having water solubility
- Polyamide (PA)
   Polyamide 6 1020, manufactured by UBE Corporation;
   melting point, 220°C; relative viscosity, 3.04
- Ethylene-1-octene copolymer (HDPE)
   ELITE 5960G, manufactured by The Dow Chemical Company;
   density, 0.962 g/cm³; melting point, 134°C;
   MFR, 0.85 g/10 minutes;
   a copolymer obtained by polymerizing raw material monomers using a metallocene catalyst
- Ethylene-1-hexene copolymer (MDPE)
   ENABLE 4002MC, manufactured by Exxon Mobil Corporation;
   density, 0.938 g/cm³; melting point, 128°C;
   MFR, 0.25 g/10 minutes;
   a copolymer obtained by polymerizing raw material monomers using a metallocene catalyst
- Ethylene-1-hexene copolymer (LLDPE)
   EXCEED XP 8656ML, manufactured by Exxon Mobil Corporation;
   density, 0.916 g/cm³; melting point, 121°C;
   MFR, 0.5 g/10 minutes;
   a copolymer obtained by polymerizing raw material monomers using a metallocene catalyst
- Linear low-density polyethylene (LLDPE)
   INNATE TF80, manufactured by The Dow Chemical Company; metallocene LLDPE;
   density, 0.926 g/cm³; MFR, 1.7 g/10 minutes
- Random polypropylene (r-PP)
   BORCLEAR RB707CF, manufactured by BOREALIS AG;
   density, 0.900 g/cm³; melting point, 145°C;
   MFR, 1.5 g/10 minutes; a propylene-ethylene copolymer
- Homopolypropylene (h-PP)
   COSMOPLENE FS3031,
   manufactured by The Polyolefin Company (Singapore) Pte Ltd.;
   density, 0.900 g/cm³; melting point, 168°C;
   MFR, 3.4 g/10 minutes; isotactic index, 98%
- Random polypropylene (r-PP)
   COSMOPLENE FS5612,
   manufactured by The Polyolefin Company (Singapore) Pte Ltd.;
   density, 0.900 g/cm³; melting point, 134°C;
   MFR, 5.5 g/10 minutes

In the following descriptions, the individual layers of five-layered multilayer films and stretched multilayer films are referred to as layer A, layer B, layer C, layer D, and layer E for convenience. The multilayer films and the stretched multilayer films include layer A, layer B, layer C, layer D, and layer E in this order.

### [EXAMPLE 1A]

An EVOH (EVAL F171B) for layer A,
an ethylene-1-octene copolymer (ELITE 5960G) for layer B,
a mixture of 50 parts by mass of an ethylene-1-hexene copolymer (ENABLE 4002MC) and 50 parts by mass of an ethylene-1-hexene copolymer (EXCEED XP 8656ML) for layer C,
an ethylene-1-octene copolymer (ELITE 5960G) for layer D, and
an ethylene-1-hexene copolymer (ENABLE 4002MC) for layer E
were coextruded to form a film by inflation film formation. In such a manner, a five-layered multilayer film with a total thickness of 100 µm, including 8-µm thick layer A, 16-µm thick layer B, 48-µm thick layer C, 16-µm thick layer D, and 12-µm thick layer E, was produced.

This multilayer film was passed through a uniaxial stretching apparatus equipped with preheating rollers, slow rollers (SD), fast rollers (FD), annealing rollers, and cooling rollers. By providing a rotational difference between the slow rollers (SD) and the fast rollers (FD), the multilayer film was uniaxially stretched four times in the MD direction (flow direction). In such a manner, a 25-µm thick uniaxially oriented multilayer film was produced.

The uniaxially oriented multilayer film was attached to the feed rollers of an aluminum vacuum deposition machine, and an aluminum deposition film with OD = 3.0 was formed on layer A (an EVOH layer) of the uniaxially oriented multilayer film under the following conditions. In such a manner, a deposition film was produced.

### <Deposition Conditions>

Deposition source: aluminum
Degree of vacuum in the deposition chamber: 2 × 10⁻³ mbar
Degree of vacuum in the take-up chamber: 3 × 10⁻² mbar
Film transport rate: 200 m/min
Film thickness: 600 Å

A two-component polyurethane lamination adhesive was coated onto the aluminum-deposited surface of the deposition film by gravure roll coating to a thickness of 3.0 g/m² (dry state) to form a lamination adhesive layer. The surface of the deposition film retaining the lamination adhesive layer and the surface of one-side clay-coated paper (Algro Finess, manufactured by Sappi Ltd.; basis weight, 50 g/m²) not coated with clay were joined together, and a thermal aging treatment at 40°C for 3 days was performed. In such a manner, an intermediate laminate was produced. From layer A of the uniaxially oriented multilayer film in the intermediate laminate, the laminate portion consisting of layer B, layer C, layer D, and layer E was peeled away at a peel speed of 50 m/min. In such a manner, the aluminum deposition film and layer A were transferred onto the one-side clay-coated paper. In such a manner, a paper barrier laminate was produced.

### [EXAMPLE 2A]

An EVOH (EVAL F171B) for layer A,
r-PP (BORCLEAR RB707CF) for layer B,
a mixture of 50 parts by mass of r-PP (BORCLEAR RB707CF) and 50 parts by mass of an ethylene-1-hexene copolymer (EXCEED XP 8656ML) for layer C,
an ethylene-1-hexene copolymer (ENABLE 4002MC) for layer D, and
an ethylene-1-hexene copolymer (ENABLE 4002MC) for layer E
were coextruded to form a film by inflation film formation. In such a manner, a five-layered multilayer film with a total thickness of 100 µm, including 8-µm thick layer A, 16-µm thick layer B, 48-µm thick layer C, 16-µm thick layer D, and 12-µm thick layer E, was produced.

The subsequent steps were performed in the same manner as in Example 1A, except that the above multilayer film was used.

### [EXAMPLE 3A]

An EVOH (EVAL L171B) for layer A,
an ethylene-1-octene copolymer (ELITE 5960G) for layer B,
a mixture of 50 parts by mass of an ethylene-1-hexene copolymer (ENABLE 4002MC) and 50 parts by mass of an ethylene-1-hexene copolymer (EXCEED XP 8656ML) for layer C,
an ethylene-1-octene copolymer (ELITE 5960G) for layer D, and
an ethylene-1-hexene copolymer (ENABLE 4002MC) for layer E
were coextruded to form a film by inflation film formation. In such a manner, a five-layered multilayer film with a total thickness of 100 µm, including 8-µm thick layer A, 16-µm thick layer B, 48-µm thick layer C, 16-µm thick layer D, and 12-µm thick layer E, was produced.

The subsequent steps were performed in the same manner as in Example 1A, except that the above multilayer film was used and the set temperatures of the rollers in the uniaxial stretching apparatus were changed as needed.

### [EXAMPLE 4A]

PVA (Nichigo G-Polymer BVE8049P) for layer A,
an ethylene-1-octene copolymer (ELITE 5960G) for layer B,
a mixture of 50 parts by mass of an ethylene-1-hexene copolymer (ENABLE 4002MC) and 50 parts by mass of an ethylene-1-hexene copolymer (EXCEED XP 8656ML) for layer C,
an ethylene-1-octene copolymer (ELITE 5960G) for layer D, and
an ethylene-1-hexene copolymer (ENABLE 4002MC) for layer E
were coextruded to form a film by inflation film formation. In such a manner, a five-layered multilayer film with a total thickness of 100 µm, including 8-µm thick layer A, 16-µm thick layer B, 48-µm thick layer C, 16-µm thick layer D, and 12-µm thick layer E, was produced.

The subsequent steps were performed in the same manner as in Example 1A, except that the above multilayer film was used and the set temperatures of the rollers in the uniaxial stretching apparatus were changed as needed.

### [EXAMPLE 5A]

A polyamide (Polyamide 6 1020) for layer A,
an ethylene-1-octene copolymer (ELITE 5960G) for layer B,
a mixture of 50 parts by mass of an ethylene-1-hexene copolymer (ENABLE 4002MC) and 50 parts by mass of an ethylene-1-hexene copolymer (EXCEED XP 8656ML) for layer C,
an ethylene-1-octene copolymer (ELITE 5960G) for layer D, and
an ethylene-1-hexene copolymer (ENABLE 4002MC) for layer E
were coextruded to form a film by inflation film formation. In such a manner, a five-layered multilayer film with a total thickness of 100 µm, including 8-µm thick layer A, 16-µm thick layer B, 48-µm thick layer C, 16-µm thick layer D, and 12-µm thick layer E, was produced.

The subsequent steps were performed in the same manner as in Example 1A, except that the above multilayer film was used and the set temperatures of the rollers in the uniaxial stretching apparatus were changed as needed.

### [COMPARATIVE EXAMPLE 1A]

An aluminum-deposited transfer PET film (VMPET-RMZ251, manufactured by Polyplex Corporation Ltd.; 12 µm; silicone-coated; OD = 2.5) was prepared. A two-component polyurethane lamination adhesive was coated onto the aluminum-deposited surface of the aluminum-deposited transfer PET film by gravure roll coating to a thickness of 3.0 g/m² (dry state) to form a lamination adhesive layer. The surface of the aluminum-deposited transfer PET film retaining the lamination adhesive layer and the surface of one-side clay-coated paper (Algro Finess) not coated with clay were joined together, and a thermal aging treatment at 40°C for 3 days was performed. By peeling away the PET film layer of the aluminum-deposited transfer PET film at a peel speed of 50 m/min, the aluminum deposition film was transferred onto the one-side clay-coated paper. In such a manner, a paper barrier laminate was produced.

### [EXAMPLE 1B]

An EVOH (EVAL G156B) for layer A,
h-PP (FS3031) for layer B,
h-PP (FS3031) for layer C,
h-PP (FS3031) for layer D, and
h-PP (FS3031) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared.

A biaxially oriented multilayer film obtained in such a manner includes:
a 1-µm thick EVOH layer,
a 1.5-µm thick polypropylene layer,
a 13-µm thick polypropylene layer,
a 1.5-µm thick polypropylene layer, and
a 1-µm thick polypropylene layer
in this order.

The subsequent steps were performed in the same manner as in Example 1A, except that the biaxially oriented multilayer film was used instead of the uniaxially oriented multilayer film.

### [EXAMPLE 2B]

An EVOH (EVAL G156B) for layer A,
r-PP (FS5612) for layer B,
h-PP (FS3031) for layer C,
h-PP (FS3031) for layer D, and
h-PP (FS3031) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared. The subsequent steps were performed in the same manner as in Example 1A, except that the biaxially oriented multilayer film was used instead of the uniaxially oriented multilayer film.

### [EXAMPLE 3B]

An EVOH (EVAL G156B) for layer A,
LLDPE (INNATE TF80) for layer B,
LLDPE (INNATE TF80) for layer C,
LLDPE (INNATE TF80) for layer D, and
LLDPE (INNATE TF80) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared. The subsequent steps were performed in the same manner as in Example 1A, except that the biaxially oriented multilayer film was used instead of the uniaxially oriented multilayer film.

### [EXAMPLE 4B]

A polyamide (Polyamide 6 1020) for layer A,
h-PP (FS3031) for layer B,
h-PP (FS3031) for layer C,
h-PP (FS3031) for layer D, and
h-PP (FS3031) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared. The subsequent steps were performed in the same manner as in Example 1A, except that the biaxially oriented multilayer film was used instead of the uniaxially oriented multilayer film.

### [EXAMPLE 5B]

A polyamide (Polyamide 6 1020) for layer A,
r-PP (FS5612) for layer B,
h-PP (FS3031) for layer C,
h-PP (FS3031) for layer D, and
h-PP (FS3031) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared. The subsequent steps were performed in the same manner as in Example 1A, except that the biaxially oriented multilayer film was used instead of the uniaxially oriented multilayer film.

### [EXAMPLE 6B]

A polyamide (Polyamide 6 1020) for layer A,
LLDPE (INNATE TF80) for layer B,
LLDPE (INNATE TF80) for layer C,
LLDPE (INNATE TF80) for layer D, and
LLDPE (INNATE TF80) for layer E
were coextruded to form five layers of films by T-die casting, yielding a five-layered film. This film was subjected to a sequential biaxial orientation treatment consisting of stretching five times in the machine direction (MD direction) and subsequent stretching 8.5 times in the width direction (TD direction), whereby an 18-µm thick biaxially oriented multilayer film was prepared. The subsequent steps were performed in the same manner as in Example 1A, except that the biaxially oriented multilayer film was used instead of the uniaxially oriented multilayer film.

### [Physical Characteristics Evaluations]

Unless otherwise specified, measurements were performed on three test specimens for each characteristic, and the arithmetic mean of the three obtained values was reported as the value of the characteristic.

### <Gas Barrier Properties Evaluations>

For the above transfer films and paper barrier laminates (hereinafter also collectively referred to as "the test specimens"), the oxygen transmission rate (cc/(m²·day·atm)) and the water vapor transmission rate (g/(m²·day)) were measured by the following methods. The results are presented in the respective tables.

A paper barrier laminate, furthermore, was folded such that the transfer layer was positioned inside, and the folded laminate was pressed once with an 800-g roller. Thereafter, the laminate was folded such that the second fold was perpendicular to the first, and the folded laminate was pressed once with an 800-g roller. The laminate folded into quarters was unfolded, and the gas barrier properties of the paper barrier laminate were measured.

### (Oxygen Transmission Rate)

Using an oxygen permeation analyzer (manufactured by MOCON, Inc.; model name, OXTRAN), the oxygen transmission rate of each test specimen in an environment at a temperature of 23°C and a humidity of 65% RH was measured according to JIS K 7126-2: 2006. When the test specimen was a transfer film, the test specimen was positioned such that the surface of the multilayer film in the transfer film faced the oxygen supply side, and the surface of the deposition film faced the detector side. When the test specimen was a paper barrier laminate, the test specimen was positioned such that the surface of the paper substrate in the paper barrier laminate faced the oxygen supply side, and the surface of the transfer layer faced the detector side.

### (Water Vapor Transmission Rate)

Using a water vapor permeation analyzer (manufactured by MOCON, Inc.; model name, PERMATRAN), the water vapor transmission rate of each test specimen in an environment at a temperature of 38°C and a humidity of 90% RH was measured according to JIS K 7129-2: 2019. When the test specimen was a transfer film, the test specimen was positioned such that the surface of the multilayer film in the transfer film faced the water vapor supply side, and the surface of the deposition film faced the detector side. When the test specimen was a paper barrier laminate, the test specimen was positioned such that the surface of the paper substrate in the paper barrier laminate faced the water vapor supply side, and the surface of the transfer layer faced the detector side.

### <Peel Strength>

The intermediate laminates obtained in the Examples and Comparative Example were sliced in the MD direction to cut out test specimens having the following size: width, 15 mm; length, 100 mm. Using these test specimens and MCT-1150 tabletop tensile and compression testing machine (manufactured by AND, Co., Ltd.), the peel strength (N/15 mm width) between the transfer layer and the support layer in the intermediate laminates was measured under the following conditions: initial chuck distance, 100 mm; peel angle, T-peel; test speed, 50 mm/min. The environment during the measurement of peel strength is at a temperature of 23°C and a humidity of 50% RH.

### [Table 1]

**Table 1**

| | Example1A | Example2A | Example3A | Example4A | Example5A | Comparative Example1A |
|---|---|---|---|---|---|---|
| Structure of the transfer film | | | | | | |
| Deposition film (thin-film layer) | AL | AL | AL | AL | AL | |
| Layer A (barrier resin layer) | EVOH | EVOH | EVOH | PVA | PA | |
| | 2µm | 2µm | 2µm | 2µm | 2µm | |
| Layer B (first polyolefin layer) | Ethylene-C8 copolymer | r-PP | Ethylene-C8 copolymer | Ethylene-C8 copolymer | Ethylene-C8 copolymer | |
| | 4µm | 4µm | 4µm | 4µm | 4µm | |
| Layer C (second polyolefin layer) | Ethylene-C6 copolymer 50% | r-PP 50% | Ethylene-C6 copolymer 50% | Ethylene-C6 copolymer 50% | Ethylene-C6 copolymer 50% | |
| | Ethylene-C6 copolymer 50% | Ethylene-C6 copolymer 50% | Ethylene-C6 copolymer 50% | Ethylene-C6 copolymer 50% | Ethylene-C6 copolymer 50% | Aluminum-deposited transfer PET film |
| | 12µm | 12µm | 12µm | 12µm | 12µm | |
| Layer D (second polyolefin layer) | Ethylene-C8 copolymer | Ethylene-C6 copolymer | Ethylene-C8 copolymer | Ethylene-C8 copolymer | Ethylene-C8 copolymer | |
| | 4µm | 4µm | 4µm | 4µm | 4µm | |
| Layer E (second polyolefin layer) | Ethylene-C6 copolymer | Ethylene-C6 copolymer | Ethylene-C6 copolymer | Ethylene-C6 copolymer | Ethylene-C6 copolymer | |
| | 3µm | 3µm | 3µm | 3µm | 3µm | |

| Physical characteristics of the transfer film | | | | | | |
|---|---|---|---|---|---|---|
| Oxygen transmission rate | 0.2 | 0.2 | 0.1 | 0.1 | 0.3 | 0.5 |
| Water vapor transmission rate | 1.0 | 1.0 | 1.5 | 2.5 | 1.5 | 0.5 |
| Peel strength in transfer to paper (N/15mm) | 0.3 | 0.3 | 0.2 | 0.1 | 0.3 | 0.05 |

| Physical characteristics of the paper barrier laminate | | | | | | |
|---|---|---|---|---|---|---|
| Oxygen transmission rate | 0.1 | 0.1 | 0.05 | 0.05 | 0.2 | 3.0 |
| Water vapor transmission rate | 0.4 | 0.4 | 0.6 | 0.9 | 0.5 | 5.0 |

### [Table 2]

**Table2**

| | Example1B | Example2B | Example3B | Example4B | Example5B | Example6B |
|---|---|---|---|---|---|---|
| Structure of the transfer film | | | | | | |
| Deposition film (thin-film layer) | AL | AL | AL | AL | AL | AL |
| Layer A (barrier resin layer) | EVOH | EVOH | EVOH | PA | PA | PA |
| | 1µm | 1µm | 1µm | 1µm | 1µm | 1µm |
| Layer B (first polyolefin layer) | h-PP | r-PP | LLDPE | h-PP | r-PP | LLDPE |
| | 1.5µm | 1.5µm | 1.5µm | 1.5µm | 1.5µm | 1.5µm |
| Layer C (second polyolefin layer) | h-PP | h-PP | LLDPE | h-PP | h-PP | LLDPE |
| | 13pm | 13pm | 13pm | 13pm | 13pm | 13pm |
| Layer D (second polyolefin layer) | h-PP | h-PP | LLDPE | h-PP | h-PP | LLDPE |
| | 1.5µm | 1.5µm | 1.5µm | 1.5µm | 1.5µm | 1.5µm |
| Layer E (second polyolefin layer) | h-PP | h-PP | LLDPE | h-PP | h-PP | LLDPE |
| | 1µm | 1µm | 1µm | 1µm | 1µm | 1µm |

| Physical characteristics of the transfer film | | | | | | |
|---|---|---|---|---|---|---|
| Oxygen transmission rate | 0.3 | 0.3 | 0.3 | 0.3 | 0.3 | 0.3 |
| Water vapor transmission rate | 1.0 | 1.0 | 1.0 | 1.5 | 1.5 | 1.5 |
| Peel strength in transfer to paper (N/15mm) | 0.2 | 0.2 | 0.4 | 0.2 | 0.2 | 0.3 |

| Physical characteristics of the paper barrier laminate | | | | | | |
|---|---|---|---|---|---|---|
| Oxygen transmission rate | 0.2 | 0.2 | 0.2 | 0.2 | 0.2 | 0.2 |
| Water vapor transmission rate | 0.5 | 0.5 | 0.5 | 0.5 | 0.5 | 0.5 |

### [Table 3]

**[Table 3]**

| Gas Barrier Properties of the Paper Barrier Laminate of Example 1A (before and after folding into quarters) | | | |
|---|---|---|---|
| | Peel speed (m/min) | Oxygen transmission rate cc/(m²·day·atm) | Water vapor transmission rate g/(m²·day) |
| Barrier values before the damage from folding into quarters | 50 | 0.1 | 0.4 |
| | 100 | 0.1 | 0.5 |
| Barrier values after the damage from folding into quarters | 50 | 0.2 | 1.8 |

### [EXAMPLES 3C and 6C]

Biaxially oriented multilayer films, deposition films, intermediate laminates, and paper barrier laminates of Examples 3C and 6C were produced in the same manner as in Examples 3B and 6B, except that the thickness of layer B, the thickness of layer C, and the thickness of layer D after stretching were changed to 2 µm, 19 µm, and 2 µm, respectively, whereby the thickness of the biaxially oriented multilayer film was changed to 25 µm. The results of the evaluations in Examples 3C and 6C were similar to the results in the Examples with the corresponding Example numbers (Examples 3B and 6B).

As those skilled in the art would understand, the transfer film and other subject matters according to the present disclosure are not limited by the descriptions in the above Examples. The above Examples and description are merely for illustrating the principles of the present disclosure; various modifications or improvements can be made without departing from the gist and scope of the present disclosure, and such modifications or improvements are all included within the scope of the present disclosure claimed for protection. The scope that the present disclosure claims for protection, furthermore, includes not only the descriptions in the claims but also equivalents thereof.

### Reference Signs List

- 1: transfer film
- 1S: support layer
- 1T: transfer layer
- 2: barrier laminate
- 10: multilayer film (stretched film)
- 12: barrier resin layer
- 12a: first surface
- 12b: second surface
- 14: first polyolefin layer
- 16: second polyolefin layer
- 20: thin-film layer
- 30: bonding layer
- 40: substrate (transfer substrate)
- 50: heat-fusible resin layer

## Claims

1. A transfer film comprising:
a support layer; and
a transfer layer peelable from the support layer, wherein:
the support layer includes at least:
a first polyolefin layer containing a polyolefin as a primary component;
the transfer layer includes at least:
a barrier resin layer containing at least one gas barrier resin as a primary component; and
a thin-film layer containing a metal and/or an inorganic oxide; and
the first polyolefin layer and the barrier resin layer are in contact with each other.

2. The transfer film according to claim 1, wherein the barrier resin layer contains, as the gas barrier resin, at least one selected from an ethylene-vinyl alcohol copolymer, polyvinyl alcohol, and a polyamide.

3. The transfer film according to claim 2, wherein the ethylene-vinyl alcohol copolymer has an ethylene content of 50 mol% or less.

4. The transfer film according to any one of claims 1 to 3, wherein the barrier resin layer has a thickness of 0.3 µm or more and 10 µm or less.

5. The transfer film according to any one of claims 1 to 4, wherein the first polyolefin layer is a layer containing polyethylene having a density of 0.930 g/cm³ or more as a primary component, a layer containing polyethylene having a density of less than 0.930 g/cm³ as a primary component, or a layer containing polypropylene as a primary component.

6. The transfer film according to any one of claims 1 to 5, wherein:
the support layer further includes one or two or more second polyolefin layers; and
the one or two or more second polyolefin layers are located on a surface of the first polyolefin layer opposite a surface facing the barrier resin layer.

7. The transfer film according to any one of claims 1 to 6, wherein the barrier resin layer has a first surface and a second surface opposite the first surface, the first polyolefin layer is in contact with the first surface of the barrier resin layer, and the thin-film layer is in contact with the second surface of the barrier resin layer.

8. The transfer film according to any one of claims 1 to 7, wherein peel strength between the first polyolefin layer and the barrier resin layer as measured under the following conditions is 0.5 N/15 mm width or less: peel angle, T-peel; test speed, 50 mm/min.

9. The transfer film according to any one of claims 1 to 8, wherein the thin-film layer is an aluminum thin-film layer, and the aluminum thin-film layer has an optical density (OD value) of 1.0 or greater.

10. The transfer film according to any one of claims 1 to 8, wherein the thin-film layer is an aluminum oxide thin-film layer or a silicon oxide thin-film layer.

11. The transfer film according to any one of claims 1 to 10, wherein the transfer layer further includes a protective layer on a surface of the thin-film layer opposite a surface facing the barrier resin layer.

12. The transfer film according to any one of claims 1 to 11, wherein:
the transfer film includes at least:
a multilayer film including at least the first polyolefin layer and the barrier resin layer; and
the thin-film layer located on the barrier resin layer; and
the multilayer film has a thickness of 10 µm or more and 100 µm or less.

13. The transfer film according to claim 12, wherein the multilayer film is a coextruded resin film.

14. The transfer film according to claim 12 or 13, wherein the multilayer film is a film uniaxially oriented in an MD direction or a biaxially oriented film.

15. A barrier laminate comprising at least:
the transfer film according to any one of claims 1 to 14;
a bonding layer; and
a substrate
in this order, wherein:
the barrier laminate includes at least:
the first polyolefin layer;
the barrier resin layer;
the thin-film layer;
the bonding layer; and
the substrate
in this order.

16. A barrier laminate comprising at least:
a barrier resin layer containing at least one gas barrier resin as a primary component;
a thin-film layer containing a metal and/or an inorganic oxide;
a bonding layer; and
a substrate
in this order.

17. The barrier laminate according to claim 16, wherein the barrier resin layer has a first surface and a second surface opposite the first surface, and the thin-film layer is in contact with the second surface of the barrier resin layer.

18. The barrier laminate according to claim 16 or 17, wherein the barrier resin layer has a first surface and a second surface opposite the first surface, and the barrier laminate further includes a heat-fusible resin layer on the first surface of the barrier resin layer.

19. The barrier laminate according to any one of claims 15 to 18, wherein the substrate is a paper substrate, a wood material, a polyimide substrate, a fluoropolymer substrate, or a polyolefin substrate.

20. The barrier laminate according to any one of claims 16 to 18, wherein the substrate is a paper substrate.

21. The barrier laminate according to any one of claims 15 to 20, wherein the bonding layer is an adhesive agent layer or an adhesive resin layer.

22. A method for manufacturing a barrier laminate, the method comprising:
a step of preparing the transfer film according to any one of claims 1 to 14 and a substrate;
a step of placing the transfer film on the substrate with a bonding layer interposed therebetween such that the thin-film layer of the transfer film faces the substrate, thereby obtaining an intermediate laminate including the transfer film, the bonding layer, and the substrate in this order; and
a step of peeling away the support layer of the transfer film in the intermediate laminate from the transfer layer, thereby obtaining a barrier laminate including the transfer layer, the bonding layer, and the substrate in this order.

23. A packaging container comprising the barrier laminate according to any one of claims 16 to 18.

24. A packaging container comprising the barrier laminate according to claim 20.
